# NEW EUROPEAN PATENT SPECIFICATION

(11) **EP 0 865 332 B2**
(45) Date of publication and mention of the opposition decision: **06.07.2011**
(45) Mention of the grant of the patent: 12.01.2005
(21) Application number: 96935849.8
(22) Date of filing: 18.09.1996
(51) Int. Cl.: B21D 26/14, B21D 39/04, B23P 11/00, B23P 17/00, F16D 1/072

(54) **TUBE FORMING ON AN END FITTING**
FORMEN EINES ROHRES AUF EINEM ENDSTÜCK
FORMAGE D'UN TUBE SUR UN EMBOUT

(30) Priority: 21.09.1995 US 4074 P; 21.09.1995 US 4075 P
(43) Date of publication of application: 23.09.1998
(73) Proprietor: The Boeing Company, Chicago, IL 60606-2016 (US)
(72) Inventor: DOLAN, Larry, E., Renton, WA 98056 (US); EICKELBERG, John, L., Seattle, WA 98122 (US); REED, Blake, E., Warner Robins, GA 31088 (US); SCARBOROUGH, Ron, N., Macon, GA 31210 (US)
(74) Representative: McLeish, Nicholas Alistair Maxwell
(86) International application number: PCT/US1996/014970
(87) International publication number: WO 1997/010907

(56) References cited:
- EP-A1- 0 278 292
- DE-A1- 2 307 693
- DE-A1- 3 616 901
- DE-B- 1 265 103
- GB-A- 1 113 964
- US-A- 2 976 907
- US-A- 3 642 311
- US-A- 4 513 488
- US-A- 4 523 872
- US-A- 4 523 872
- US-A- 4 531 393
- US-A- 4 807 351
- US-A- 4 930 204
- US-A- 5 304 012
- MAGNEFORMING TECHNOLOGY FOR SHAFTS AND STRUTS 1995,
- EIN RAUBVOGEL IN EDWARDS (FLIEGERREVUE.DE) 2001,

## Description

This invention relates to an end fitting connected to an end of a conductive metal tube (see for example US-A-5 304 012 or CH-A-129362), wherein the ends of the torque tubes are electromagnetically formed using tubing material as purchased without preliminary heat treating and storage at cold temperatures and to a tube forming apparatus for electromagnetically deforming the end of a tube onto a such end fitting to form a torque transmitting mechanical joint between the tube and the insert that is as strong or stronger than the tube itself and is very fatigue resistant.

### BACKGROUND OF THE INVENTION

There are many uses of an elongated metal tube having end fittings connected to the tube with a rigid mechanical joint. Push rods and torque tubes are two very common uses of this type of device. Torque tubes are used for mechanically transmitting torque from a driver to a driven device through a torque tube. These applications often require that the torque tube be light and inexpensive, have high fatigue strength and an ultimate yield strength at the end fitting equal to or exceeding that of the tube itself. Drive shafts for vehicles such as cars and trucks are examples of a type of torque tube requiring such characteristics. Presently, vehicle drive shafts are made of steel tubing attached at their ends to torque coupling fittings such as U-joint components or the like. The use of aluminum tubing in a vehicle drive shaft would have an attractive weight saving benefit, but the difficulties of forming high strength aluminum tubing onto the end fittings without expensive preliminary heat treating has deterred the use of aluminum tubing in this application.

In aviation applications, the requirements for light weight mechanical systems have dictated use of aluminum tubing for torque tubes for many years. However, the apparatus and methods for attachment of the end fittings on these torque tubes have some unsatisfactory properties that manufacturers and operators of commercial transport airplanes would prefer to eliminate. Riveting the end fitting onto the tube is costly because it is labor intensive. The rivets can loosen after extensive service, resulting in lost motion and possibly resulting eventually in failure after many years unless the torque tube is inspected and repaired or replaced when the rivets begin to loosen.

Welding or brazing the tubing to the end fitting presents the difficulties of a heat affected zone adjacent the fused joint, and low tolerance fit-up requirements for the fitting and the tube. Crack propagation in the fused joint can also be a problem; it may be difficult to detect by ordinary inspection procedures, and failures that do occur may be catastrophic and result in failure of flight critical control surfaces. Therefore, welding or brazing is rarely used in load-bearing flight critical hardware.

Mechanically forming the tubing onto the end fitting is a promising technique because it does not require fasteners nor produce the heat affected zone of a fused joint. Some potentially usable techniques for exerting pressure on the aluminum tubing to deform it around the end fitting for this purpose are swaging, hydroforming, rubber press forming, electromagnetically forming, explosive forming. Electro-magnetic forming is especially appealing because of the potential for efficient, high volume, precisely repeatable production processes, but existing apparatus and techniques to deform aluminum tubing materials possessing the required properties of high strength and corrosion cracking resistance have resulted in formation of cracks in the tubing during forming onto the end fitting. The resulting cracks are unacceptable because of the shortening of the fatigue life of the torque tube.

Electromagnetically pulse forming 2024 aluminum tubing in the T-3 condition onto end fittings shown in U.S. Patent No. 4,523,872 using an "exploding coil" for electromagnetically forming the 2024 aluminum was time consuming, because a new coil was needed for each forming operation. The exploding coil literally burst like a hand grenade, creating a shower of copper wire fragments that required careful shielding to prevent injury to the workers, and to protect them from the loud noise involved in the operation.

The production equipment used to form the tubing around the end fittings must be durable, repeatable and accurate. That is, it must be capable of producing many parts without wear or need for adjustment. The parts it produces must always be the same for a given setting of the equipment, and the equipment must be capable of easily, quickly and accurately indexing the parts to be formed in exactly the same place so they are positioned accurately with respect to each other and with respect to the equipment each time a torque tube is made. Likewise, the components of the equipment must be accurately positioned relative to each other the same way each time the tube is formed on an end fitting so that substantially identical torque tubes are made using identical settings of the equipment and acting on identical parts.

Thus, there has been an urgent need for an apparatus for electromagnetic pulse forming an end fitting on an aluminum tube for manufacture of torque tubes, push rods and other such devices. The apparatus should form acceptable joints even if the tubing material were primed with corrosion protection coatings before forming, and should be useful to form the end of the tube onto the end fitting without further preparation such as sizing, heat treating or freezer storage. The process for such an optimal system would produce very little or no scrap or rework, would be low in production cost, and would produce a torque coupling to the tube material that would be stronger than the tube itself and, when used to make torque tubes for aviation applications, would withstand fatigue loading for a period exceeding about four times the service life of an airplane.

### SUMMARY OF THE INVENTION

Accordingly, it is an object of this invention to provide an end fitting connected to the end of a conductive metal tube by electromagnetically forming. This object is achieved by an end fitting according to claim 1. Another object of this invention is to provide an apparatus for forming the end of a conductive metal tube onto an end fitting for connection to the end of a conductive metal tube by electro-magnetically forming the tube end around the end fitting. This object is achieved by an apparatus according to claim 16. Still another object of this invention is to provide a process of making a torque tube having fittings magnetically formed onto its ends. This object is achieved by a process according to claim 12. A further object of this invention is to provide an improved process of transmitting torque from a driver at one end of a torque tube to a driven device at the other end of the torque tube wherein torque is transmitted through end fittings on the tube to the tubing material by virtue of the tubing material having been deformed around the fitting, and to provide a process for forming a metal tube onto an end fitting according to the invention. These objects are achieved by the processes of claims 5 and 6 respectively.

### DESCRIPTION OF THE DRAWINGS

The invention and its many attendant objects and advantages will become better understood upon reading the following description of the preferred embodiment in conjunction with the following drawings, wherein:
Fig. 1 is an elevation of a torque tube made in accordance with this invention, shown with the center section broken out for clarity of illustration;
Fig. 2 is a cross section along lines 2-2 in Fig. 1;
Fig. 3 is a perspective view of an end fitting used in the torque tube shown in Fig. 1;
Fig. 4 is a side elevation of the end fitting shown in Fig. 3;
Fig. 5 is an end elevation along lines 5-5 in Fig. 4;
Fig. 6 is a sectional elevation along lines 6-6 in Fig. 5;
Fig. 7 is a side elevation of the end fitting shown in Fig. 4, rotated 30° from the position shown in Fig. 4;
Fig. 8 is a sectional end elevation along lines 8-8 in Fig. 7;
Fig. 9 is a perspective view of a coupling sleeve for torque-coupling the torque tube shown in Fig. 1 to a driven or driving apparatus;
Fig. 10 is an enlarged sectional elevation of the coupling sleeve shown in Fig. 9;
Fig. 11 is a perspective view of an apparatus for forming tubing material onto end fittings using a process to make torque tubes in accordance with this invention;
Fig. 12 is an elevation of the forming apparatus shown in Fig. 11, showing overlaid the position of the torque tube and its end fittings in the apparatus;
Fig. 13 is an end elevation of the apparatus shown in Fig. 11 along lines 13-13 in Fig. 12;
Fig. 14 is a partial plan view (omitting the power cabinets) of the apparatus shown in Figs. 11 and 12;
Fig. 15 is a perspective view of the front end of the tube support assembly and main coil shown in Figs 11 and 12;
Fig. 16 is a side elevation of the tube support table shown in Figs. 12 and 14;
Fig. 17 is a plan view of the tube support table shown in Fig. 16;

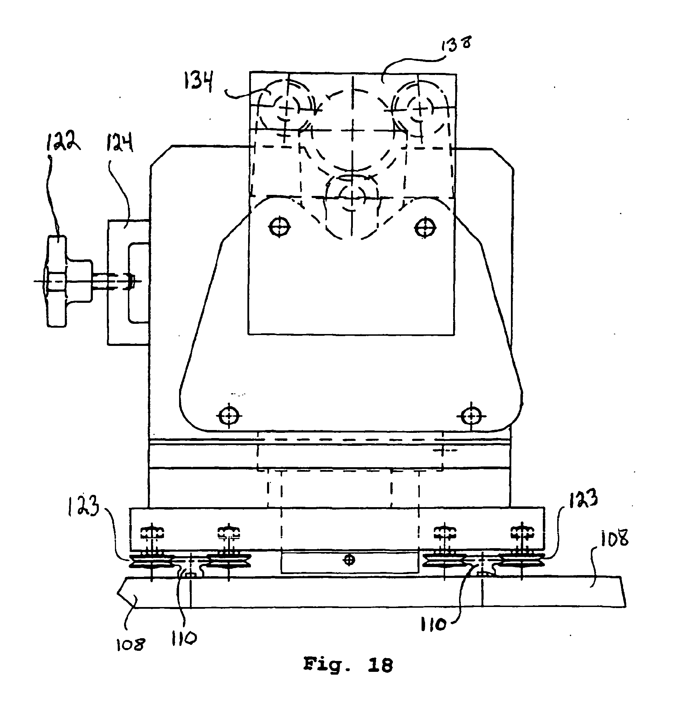

Fig. 18 is an end elevation of the rear carriage viewed along lines 18-18 in Fig. 16;

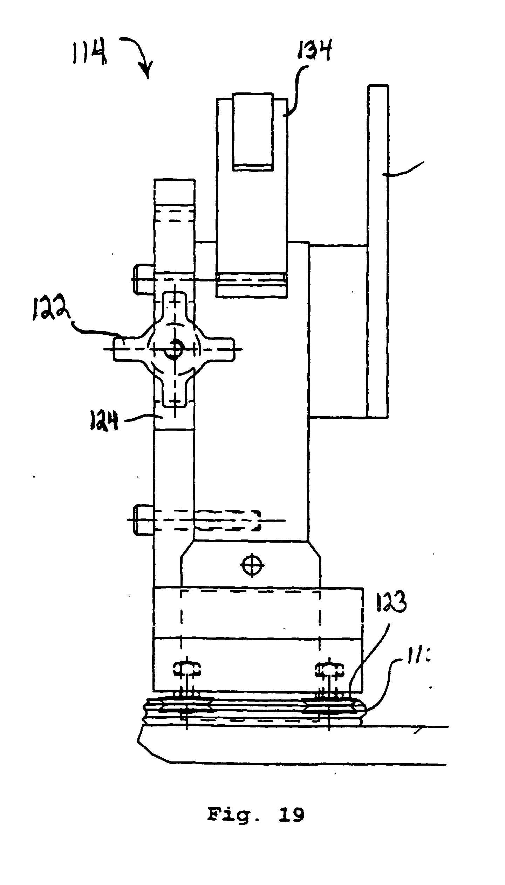

Fig. 19 is a front elevation of the rear carriage shown in Fig. 18;
Fig. 20 is an end elevation of the front carriage viewed along lines 20-20 in Fig. 16;
Fig. 21 is a front elevation of the front carriage shown in Fig. 20;
Fig. 22 is a perspective view of the front end of the forming apparatus, with the top half of the connected insulator block and field concentrator lifted off;
Fig. 23 is an enlarged elevation, partly in section, of the tube locator assembly attached to the front carriage, as shown in Fig. 12;

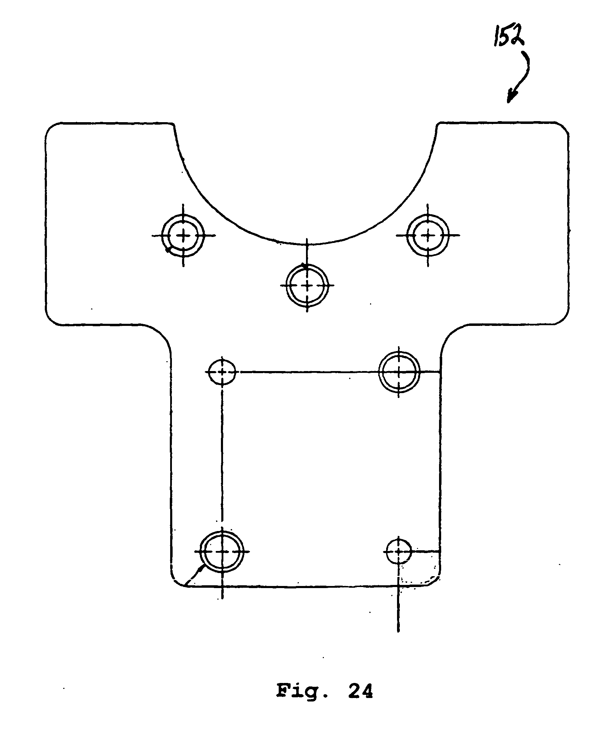

Fig. 24 is an enlarged end elevation of the attachment block shown in Fig. 23;
Fig. 25 is an enlarged side elevation of the insulator block shown in Fig. 23;

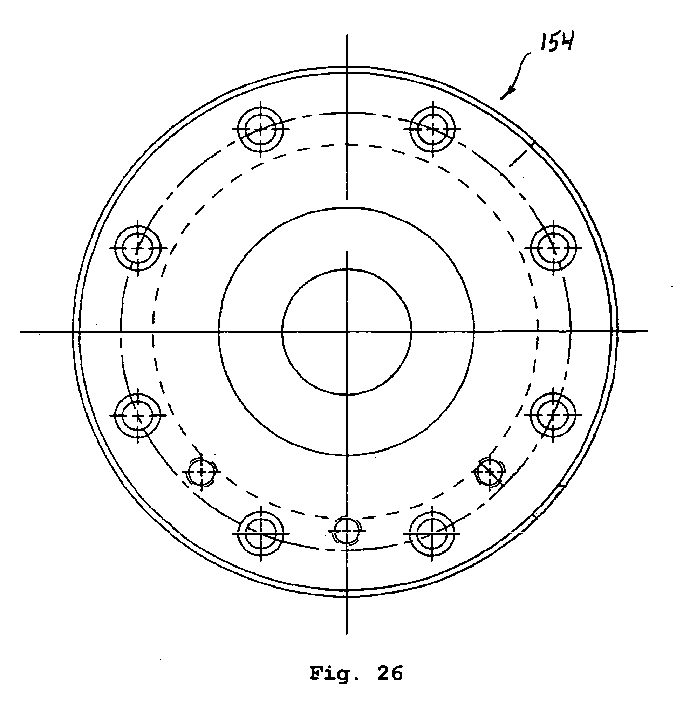

Fig. 26 is an end elevation viewed along lines 26-26 in Fig. 25;
Fig. 27 is an end elevation viewed along lines 27-27 in Fig. 25;
Fig. 28 is an end elevation of the field concentrator viewed along lines 28-28 in Fig. 23, with the tube locator block and the tube and end fitting removed for clarity;
Fig. 29 is a plan view of the field concentrator shown in Fig. 23;
Fig. 30 is an enlarged view, partly in phantom, showing the tube locator assembly shown in Fig. 23;
Fig. 31 is a plan view along lines 31-31 in Fig. 30;
Fig. 32 is an enlarged plan view on the locator block shown in Fig. 31;
Fig. 33 is a side elevation of the locator block along lines 31-31 in Fig. 32;

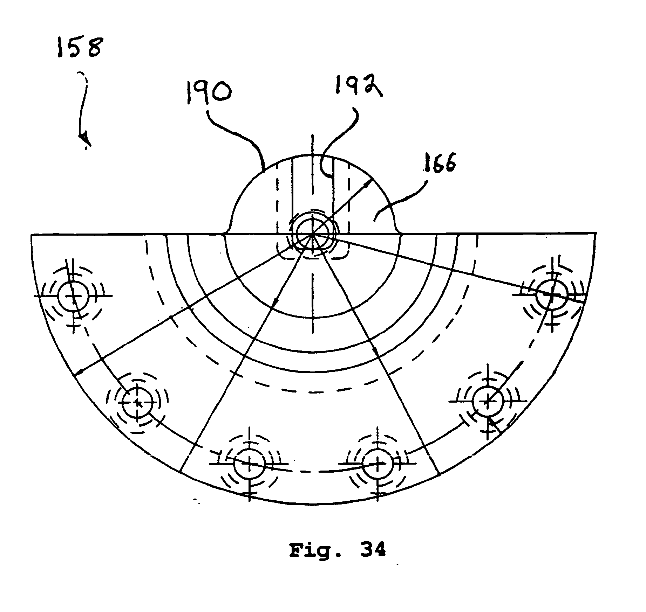

Fig. 34 is an end elevation of the locator block along lines 32-32 in Fig. 33;

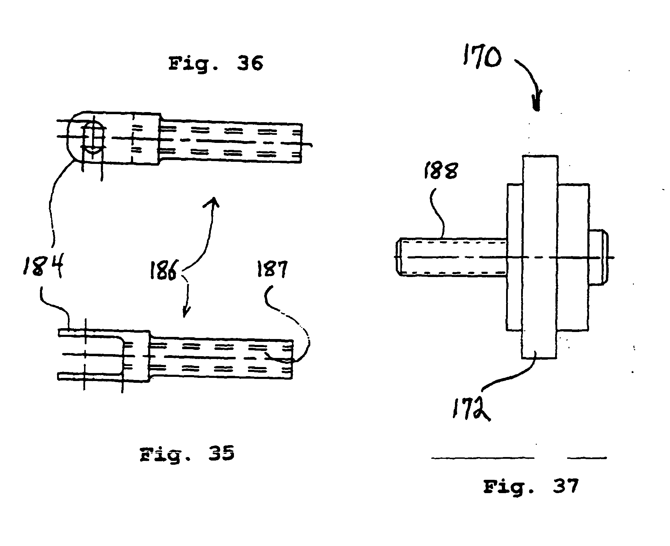

Fig. 35 is a plan view of the connecting shaft shown in Figs. 23 and 31;
Fig. 36 is a side elevation of the connecting shaft shown in Fig. 35;
Fig. 37 is a side elevation of the gripper shown in Fig. 31; and
Fig. 38 is an enlarged sectional elevation of one half of the field concentrator web positioned around the tube and end fitting shown in Fig. 23 immediately before forming.

### DESCRIPTION OF THE PREFERRED EMBODIMENT

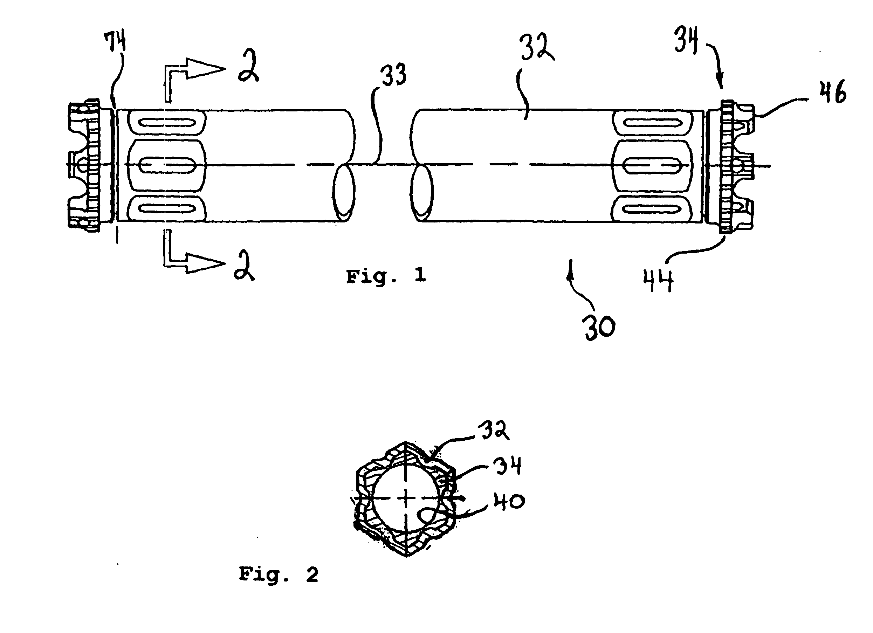

Turning now to the drawings, wherein like reference characters designate identical or corresponding parts, and more particularly to Figs. 1 and 2 thereof, a torque tube 30 made by the apparatus of this invention is shown having an elongated cylindrical tube 32 having a longitudinal axis 33, and an end fitting 34 fixed coaxially in the tube 32 at each end. The tube 32 is preferably 2024 aluminum, purchased from the supplier in the T-3 temper. Pesheney, an aluminum manufacturer in France, supplies 2024 tubing in various diameters and wall thicknesses that are suitable for use in these torque tubes, although other materials can be used, depending on the anticipated maximum loads, fatigue life and chemical environment the torque tube can be expected to encounter. The end fittings 34 are designed to be fixed in the ends of the tube 32 by forming the tube around the end fitting. A host of forming techniques are known and could be used for this purpose, such as swaging, hydroforming, explosive forming, etc. However, according to the invention the manufacturing technique for fixing the end fittings 34 in the ends of the tubes 32 is electromagnetic pulse forming, explained in detail below, which requires that the tube 32 be electrically conductive or, if not, must be provided with a conductive sleeve in which eddy currents can be magnetically induced in the forming process. If a conductive sleeve is used over a tube of material such as stainless steel having lower conductivity, the discussion below regarding the generation of opposing magnetic fields in the tube pertains to the conductive sleeve.

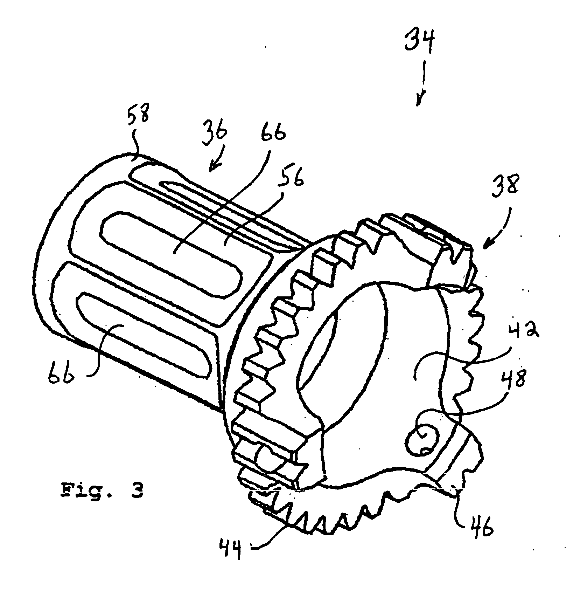

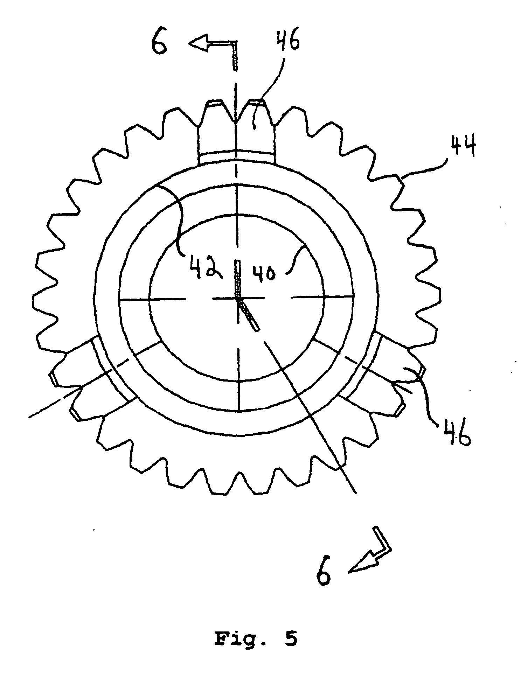

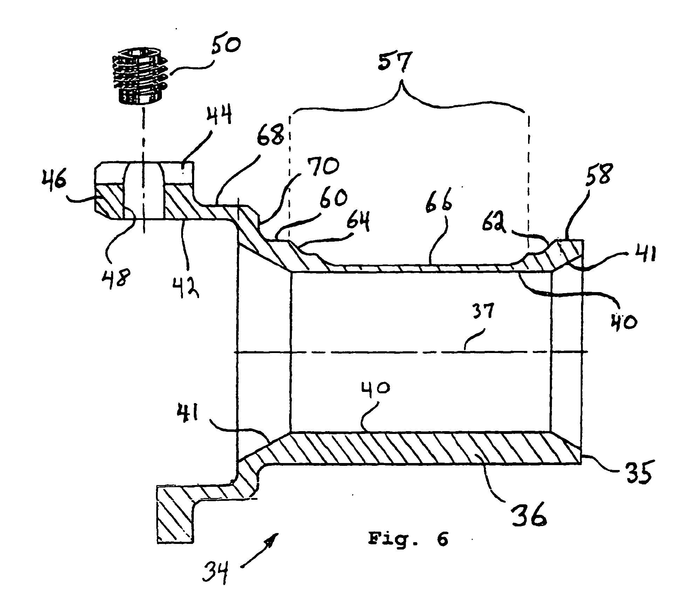

The end fitting 34, shown in Figs. 3-8, is preferably made of 15-5 stainless steel having 15% chromium, 5% nickel, 4% copper and the balance iron with less than about 1% carbon. Naturally, other materials could be used for the fitting 34, but 15-5 stainless steel is used because of its combination of corrosion resistance, machineability and strength. The fitting 34 has a tubular body 36 having an inner axial end 35 and a longitudinal axis 37 which, in the assembled torque tube 30, is coincident with the axis 33 of the tube 32. A torque coupling 38 is integral with the end fitting 34 at one axial end of the tubular body 36. An axial bore 40 extends through the tubular body 36, and is beveled at each end 41 to save weight. An enlarged counterbore 42, coaxial with the axial bore 40, extends through the torque coupling 38, as best shown in Fig. 6.

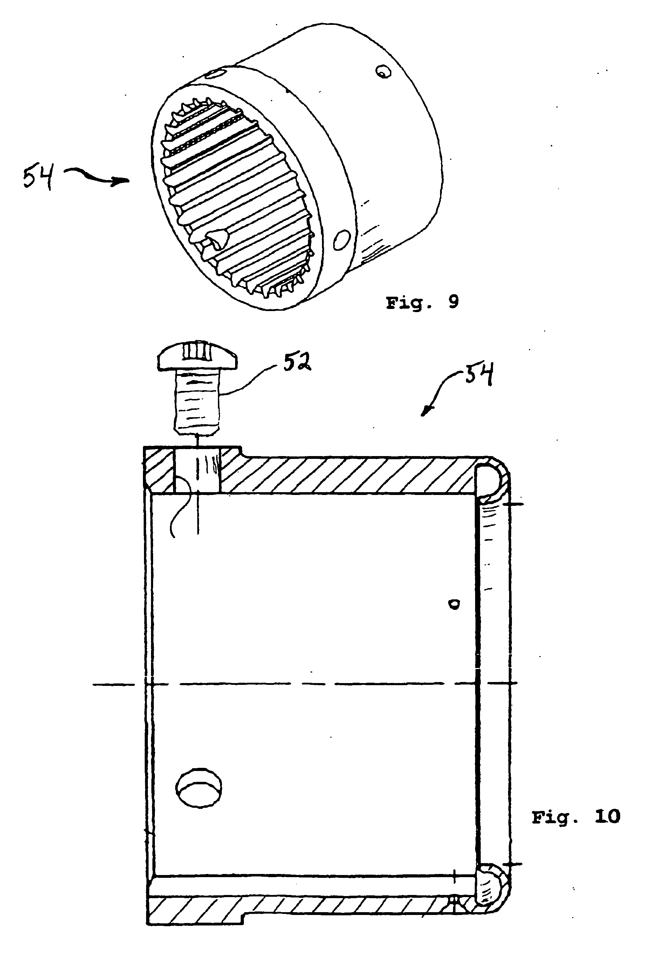

Either or both torque couplings 38 on the end fittings at the two ends of the torque tube 30 could be components of a U-joint or other conventional coupling device, but the coupling 38 in this preferred embodiment is a splined annulus 44 having three axially protruding nubs 46 circumferentially spaced equally around the annulus 44. Each nub 46 has a radial hole 48 extending completely through the nub and communicating with the axial counterbore 42. Each hole 48 receives a threaded insert 50, shown in Fig. 6, to receive screws 52 for holding a coaxial, internally splined sleeve 54 axially in place around the splined annulus 44. The sleeve 54, illustrated in Figs. 9 and 10, couples the torque tube 30 to a driving or driven gear in the mechanical system in which it operates. For example, in the leading edge of an airplane wing, the torque tube 30 is driven by a hydraulic motor and drives a pinion gear for driving a gear rack when the leading edge slats are to be extended or retracted for take-off and landing. The sleeve 54 enables the torque tube 30 to flex angularly with respect to the driving gear or coupled mechanism while remaining in torque-coupled relationship thereto, and also permits a limited degree of axial displacement of the torque tube 30 to accommodate wing deflection in flight.

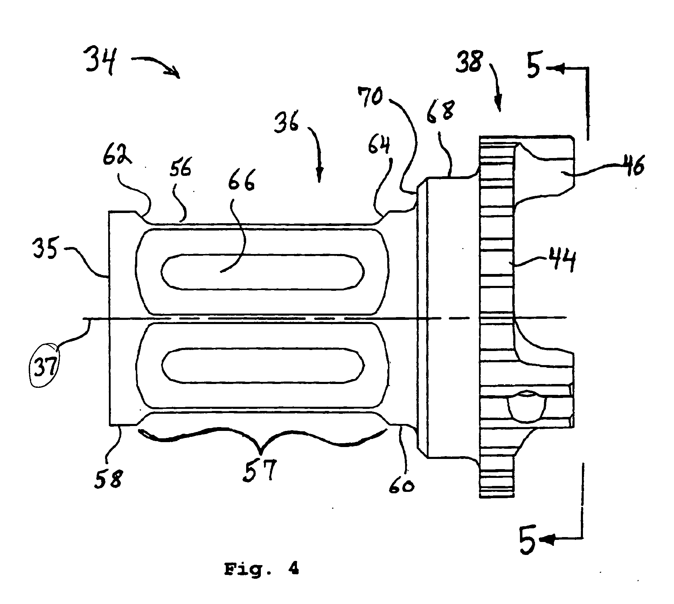

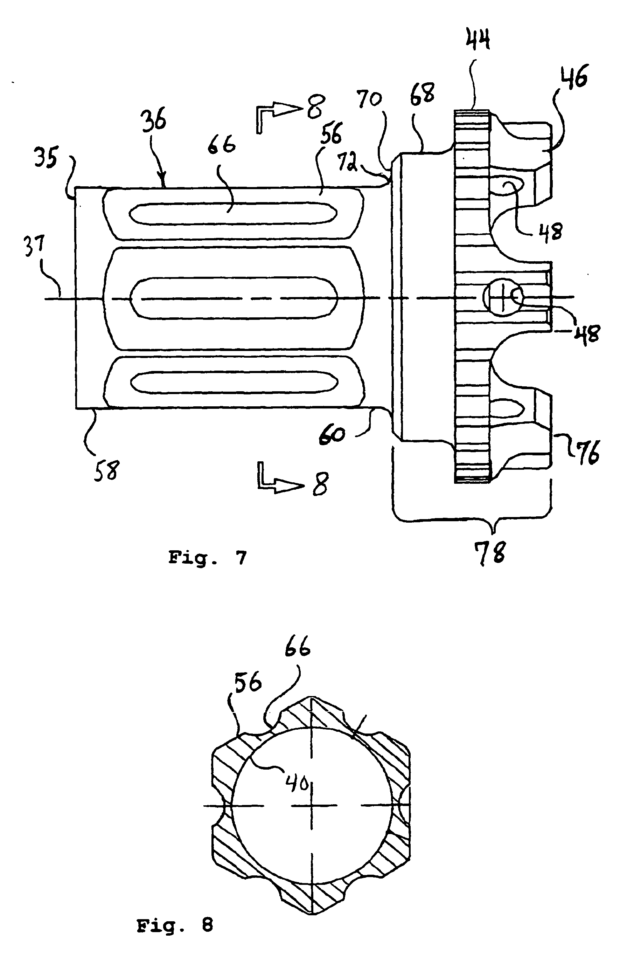

As shown best in Fig. 4, six flat lands 56 are milled onto the surface of the center section 57 of the tubular body 36, forming a cross section through the axis 37 approximately in the form of a regular polygon, preferably a hexagon, as illustrated in Fig. 8. The flat lands 56 terminate axially short of both ends of the tubular body 36, leaving the two end portions of the tubular body 36, each in the form of a circular cross-section cylinder extending axially slightly beyond the hexagonal center section, providing an end supporting surface 58 and a center supporting surface 60 for the tube 32 on both axial ends of the flat lands 56 when the tube is electro-magnetically pulse formed down into the flat lands 56. The axial ends of the flat lands 56 blend onto the supporting surfaces 58 and 60 with sloping shoulders 62 and 64, respectively, lying at an angle of between 30-55°, preferably about 45° from the horizontal, around which the 2024 aluminum of the tube 32 can be formed in the T-3 condition without cracking. Electromagnetically forming the aluminum tube 32 onto the hexagonal center section 57 of the end fitting 34 establishes a torque transmitting joint between the end fitting 34 and the tube 32 that is stronger torsionally than the tubing material itself. Axial load transmission between the tube 32 and the end fitting is established by engagement of the shoulders 62 and 64 on the end fitting with portions of the tube 32 formed over the shoulders.

A groove 66 is milled into the flat face of each land 56 as shown best in Figs. 6 and 8. The groove 66 is a simple circular cross-section groove cut with a simple spherical end cutter. The groove 66 provides a runout region for the tube 32 to expand into when it is electromagnetically formed around the end fitting 34 so it does not rebound away from the flat face of the lands 56 by springback or reflection. This ensures that the tube material remains under slight tension after it is formed around the end fitting 34, so it retains a slight hoop stress and maintains a tight torsional joint on the end fitting 34.

The dimensions of the groove 66 are not critical and need not be held to close tolerances, so the machining on the groove is not a costly operation. However, the shape of the groove 66 should be conducive to receiving the tube material as it is impulse formed onto the fitting 34 and avoid any sharp bends or folds of the material when it forms down into the grooves 66. The radius of curvature of the circular groove 66 should be greater than about 10% of the radius of the axial bore 40, and less than one third of the point-to-point dimension of the face of the hexagonal surface in which the groove is formed. These proportions militate for a groove 66 that is big enough to receive the runout of the tube when it forms down against the end fitting 34 without a sharp bend at the edge of the groove 66 and without excessively thinning the floor of the groove 66 which could weaken it to the degree that it could deform during forming.

The splined annulus 44 extends radially from an enlarged diameter step 68 at the inner end of the tubular body 36. The step 68 forms a shoulder 70 with the tubular body 36 at the junction with the center cylindrical supporting surface 60. When the fitting 34 is inserted into the tube 32, the tubular body 36 is slid all the way into the tube 32 as far as it will go. The end of the tube 32 does not actually engage the shoulder 70 because a fillet 72 at the corner of the end fitting 34 where the center cylindrical supporting surface 60 meets the shoulder 70 engages the inside peripheral edge of the tube end before the tube end reaches the shoulder 70, so a small gap 74 remains between the shoulder 70 and the axial end of the tube 32. The fillet 72 avoids creating a stress riser at that inside corner, and the gap 74 provides a space in which sealant can be applied and retained to seal the interface between the end fitting 34 and the tube 32. The protruding nubs 46 have axial end faces 76 which are machined precisely to give the distal end portion 78 of the end fitting 34, indicated in Fig. 7 as that portion between the shoulder 70 and the axial end faces 76 of the protruding nubs 46, a known dimension that is useful for forming the second end of the tube 32 onto an end fitting 34 after the first end has been formed on a forming apparatus 100, to be described below.

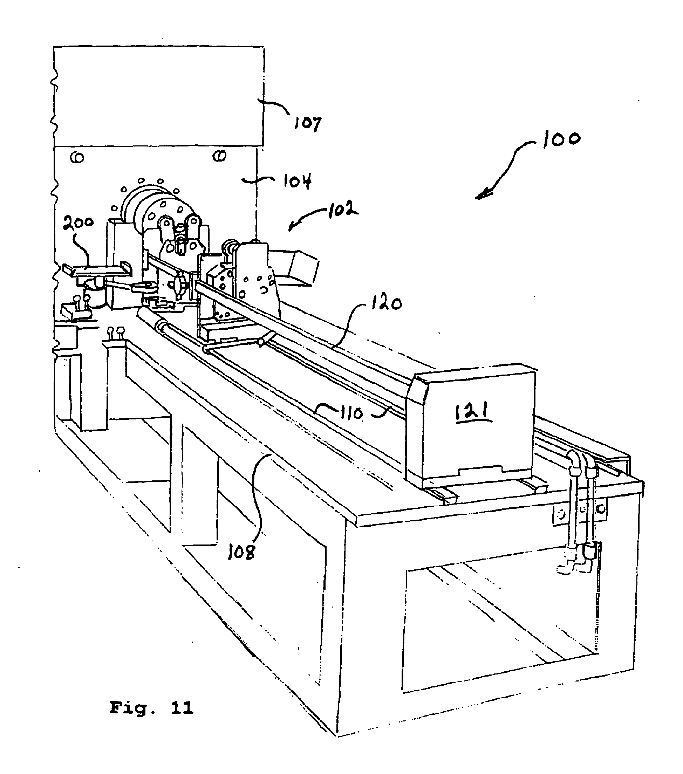

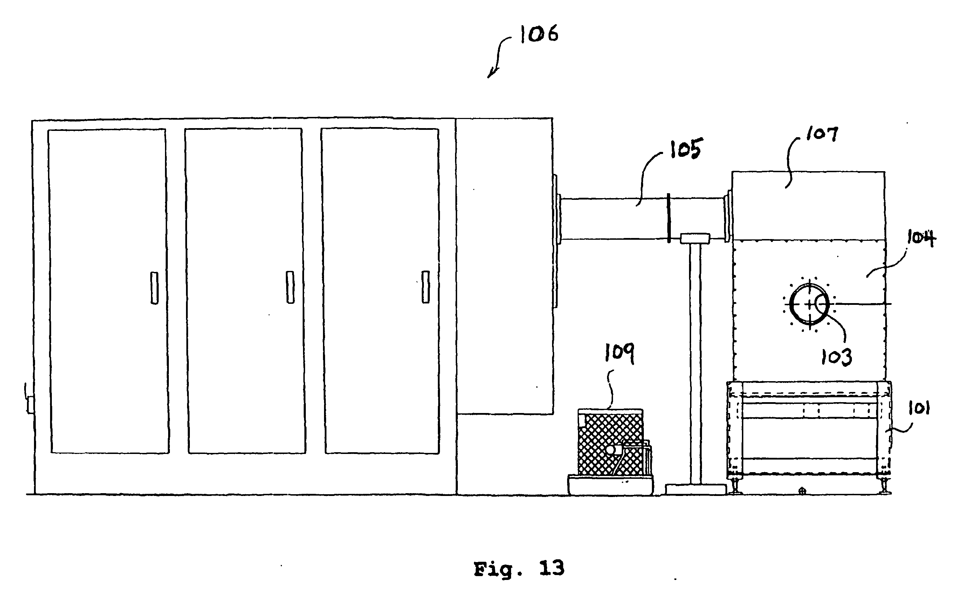

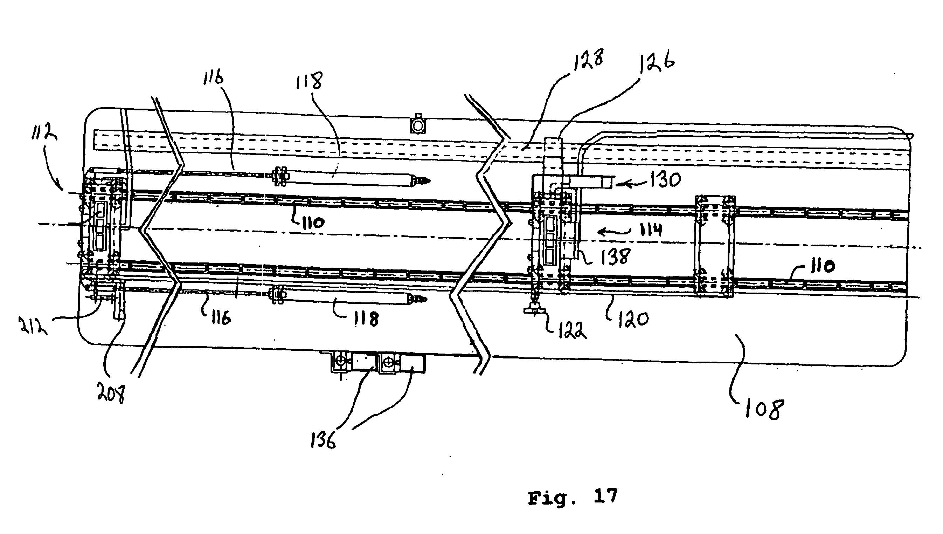

The forming apparatus 100, shown in Figs. 11-17, performs the process of electromagnetically forming the aluminum tubing 32 onto end fittings 34 to manufacture the torque tubes 30 in accordance with this invention. This apparatus could also be used for manufacturing other types of tubes with end fittings and even for down-sizing tube ends. It is fast, easy to use, safe, quiet, reliable, repeatable and is capable of production at a sustained rate.

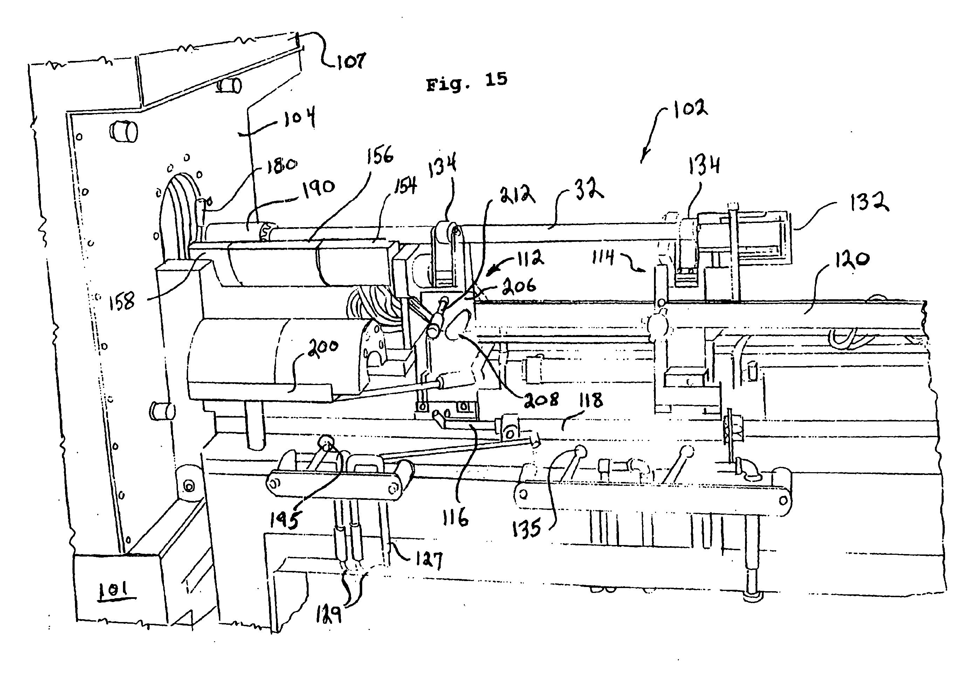

As illustrated best in Figs. 11 and 15, the apparatus 100 includes a tube support assembly 102 for holding the tube 32 while the end fitting 34 is inserted and properly positioned in the end of the tube 32 and for moving the tube 32 and the installed end fitting 34 into an opening 103 in a main coil 104 where the tube is electromagnetically formed onto the end fitting 34 with electrical power supplied through a conduit 105 from a power supply cabinet 106 holding a power supply, a capacitor bank, and electronic controls for powering the main coil 104. Power from the capacitors in the cabinet 106 is delivered along fifteen cables in the conduit 105 to a power bus in a housing 107 atop the main coil 104, to which the power bus is electrically connected. A chiller 109 cools a coolant that is pumped through cooling channels in the main coil 104 to remove heat generated during operation of the apparatus 100. The main coil 104 and power supply cabinet 106 (and associated components) are available commercially from Elmag, Inc. of San Diego, California as the "Magnepuls" Electromagnetic Energy Pulse System.

The tube support assembly 102 includes an elongated table 108 on which two pairs of rails 110 are mounted for supporting a front carriage 112 and a rear carriage 114 for longitudinal translation on the rails 110. Two piston rods 116 on pistons in double acting air cylinders 118, one on each side of the table 108 and extending along the longitudinal edges of the table, are connected to the front carriage 112 for longitudinal movement along the rails 110. A connecting bar 120 is fastened between the front carriage 112 and the rear carriage 114 to ensure that both carriages 112 and 114 move together. The rear end of the connecting bar 120 is supported on a traveling block 121. A hand wheel 122 on a clamp bolt threaded into a U-bracket 124 on the rear carriage 114 permits the spacing between the front and rear carriages to be adjusted. Wheels 123 support the front and rear carriages 112 and 114 and the traveling block 121 for smooth linear motion along the rails 110.

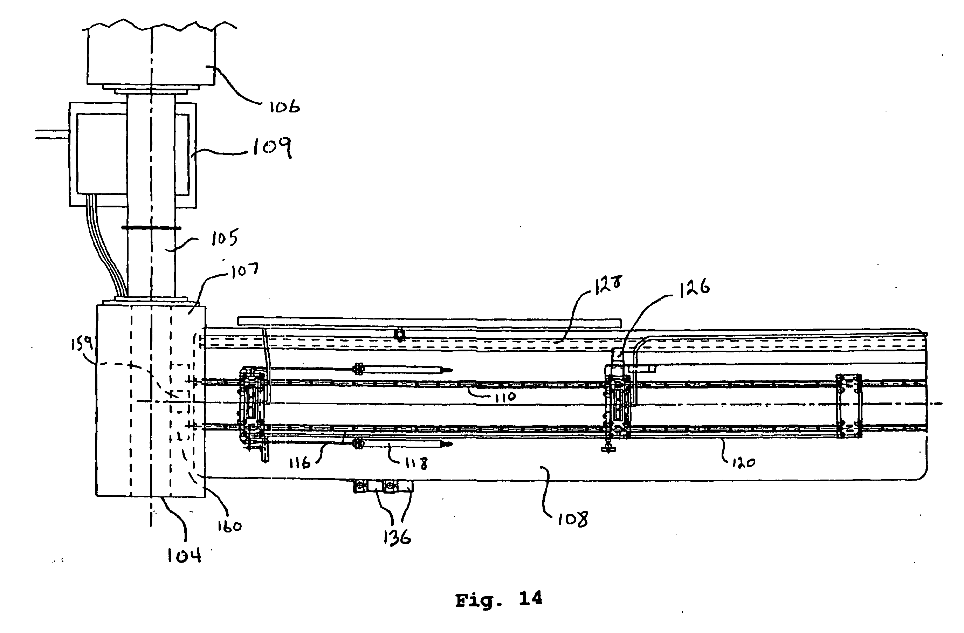

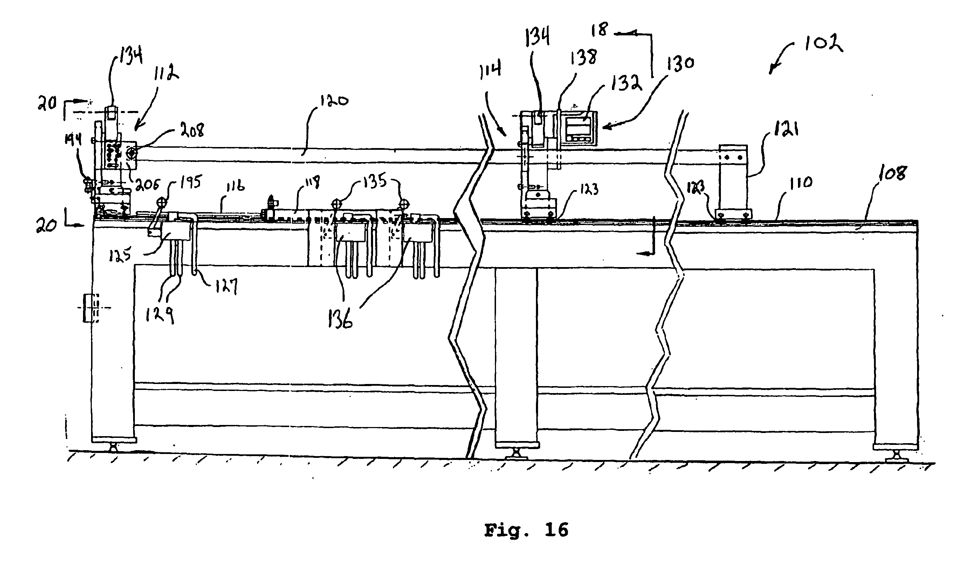

A control valve 125, best shown in Fig. 16 controls the flow of air under pressure from an air pressure source through a supply line 127 to air lines 129 to a selected end of the air cylinders 118 so the carriages may be driven in either direction by operating the control valve in one direction or the other. A sensor 126 projecting from the back side on the rear carriage 114 as shown in Fig. 14, engages a longitudinal scale 128, such as the "Pro-Scale" #210-10 available from Accurate Technology, Inc. in Kirkland, WA. A digital indicator 130 on a display 132 indicates the longitudinal position of the rear carriage 114 as sensed by the sensor 126.

Each carriage 112 and 114 includes a self-centering, pneumatically actuated three-roller tube clamp 134 such as the Autoblock #MWR 21/75 commercially available from Reynolds Machine and Tool Co., in Melrose Park, IL. The tube clamps 134 are mounted atop the carriages 112 and 114 for gripping and centering the tube 32 when valve handles 135 on a pneumatic control assembly 136 are moved. The use of self-centering clamps 1345 allows all sizes of the tube 32 to be loaded on their respective centerlines so the tube always aligns with the center of the forming coil 104, to be described below, and allows rotation of the tubing after clamping. A back stop 138 is mounted on the rear carriage 114 intersecting the axis of the tube clamps 134 to provide a reference surface against which the tube 32 can be abutted. The known length of the tube 32 can be used with the longitudinal scale 128 and sensor 126 to accurately position the end of the tube 32 relative to the nested end fitting 34 in the main coil 104, as is explained below.

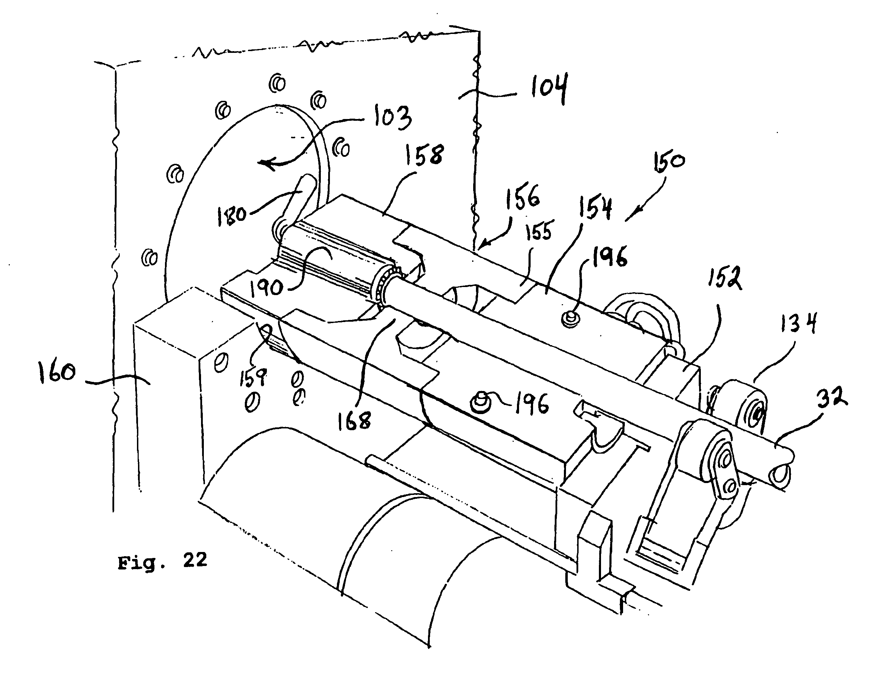

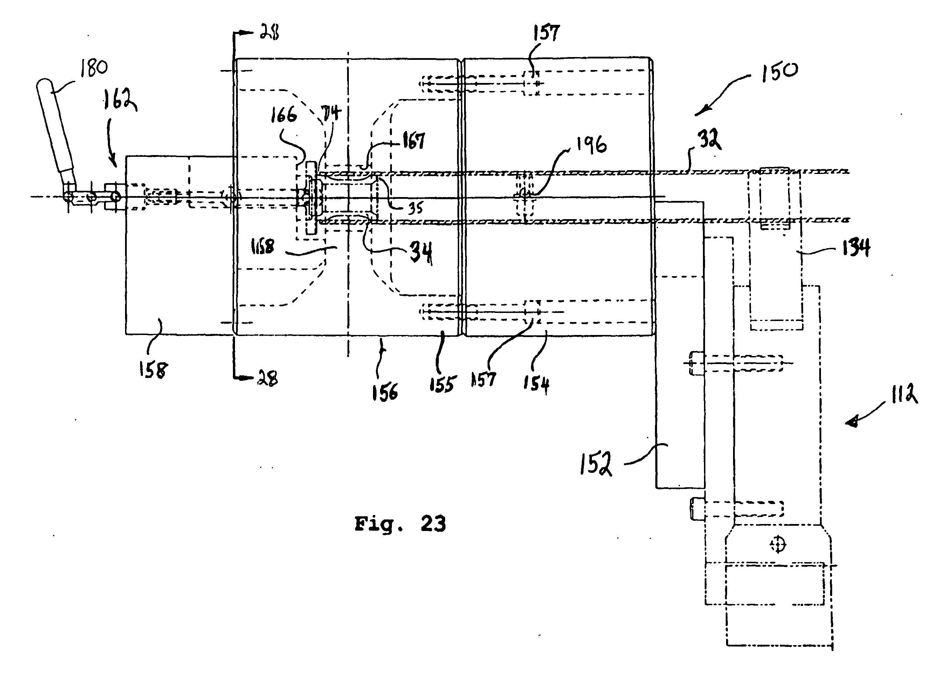

A tube locator assembly 150, shown in Figs. 22 and 23, includes an attachment block 152 by which the tube locator assembly 150 is attached to the front carriage 112, and an insulator block 154 fastened at one end to the attachment block 152. The insulator block is made of some suitable non-conductive material such as ultra-high molecular weight polyethylene, which is not only a good electrical insulator and a durable material, but also withstands the harmonics created by the electromagnetic forming pulse better than phenolics normally used in applications of this kind.

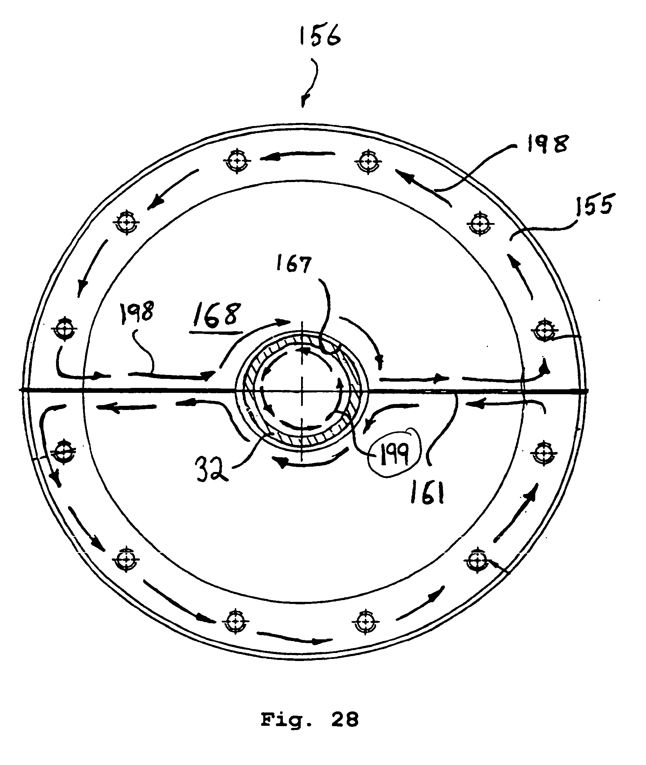

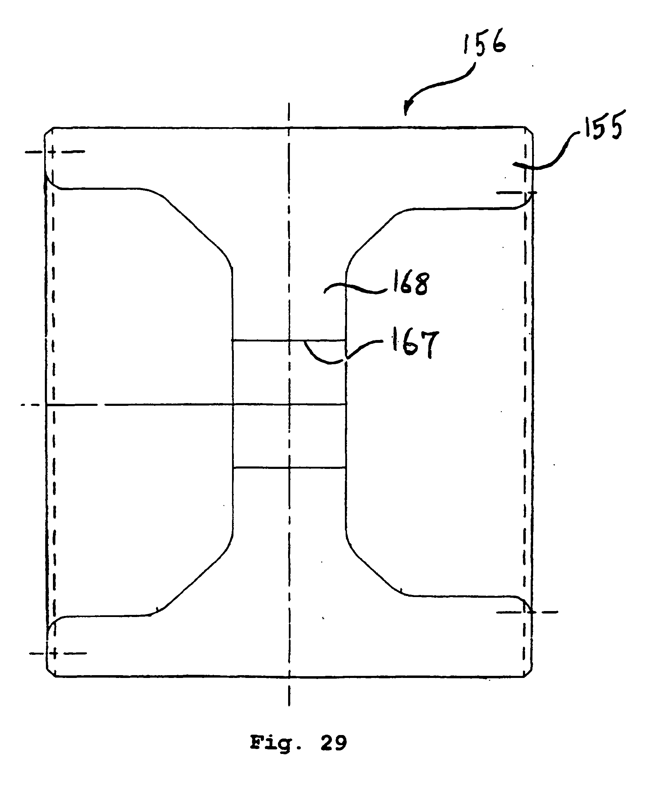

A circumferential flange 155 of a field concentrator 156, shown in Figs. 28 and 29, made highly conductive, high strength material such as beryllium copper, is fastened by screws 157 at one end to the other end of the insulator block 154, as shown in Fig. 23. A locator block 158, also made of ultra-high molecular weight polyethylene, is fastened to the other end of the lower half of the field concentrator 156. The locator block 158 is supported vertically for sliding movement on an upwardly opening semi-cylindrical channel 159 on the top of a cradle block 160 fastened to the facing surface of the main coil assembly 104. The insulator block 154 and field concentrator 156 are split on a horizontal plane through the longitudinal axis of the insulator block 154 and the field concentrator 156 into upper and lower diametrical halves, for ease of insertion of the tube 32 and its nested end fitting 34 into the field concentrator 156 for forming, as described below. A thin layer of electrical insulation 161, such as polyethylene or Teflon or preferably G-10 fiberglass, covers the surface of the upper and lower field concentrator halves along the horizontal plane dividing the upper and lower halves to electrically insulate the two halves of the field concentrator 156 from each other.

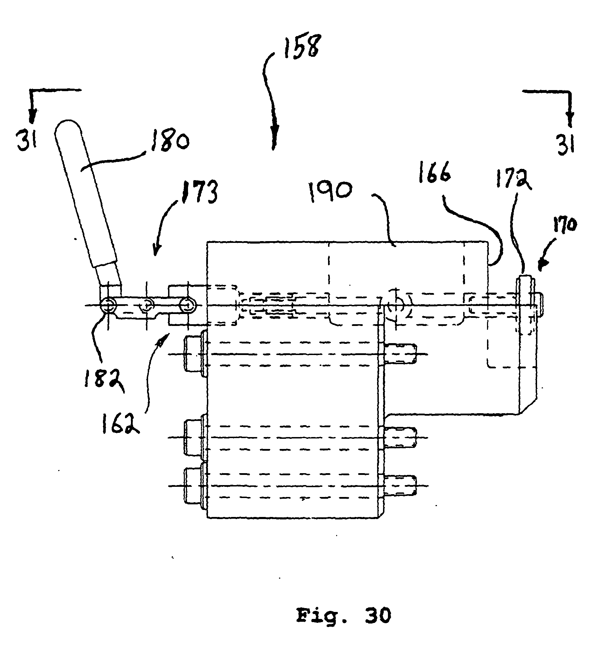

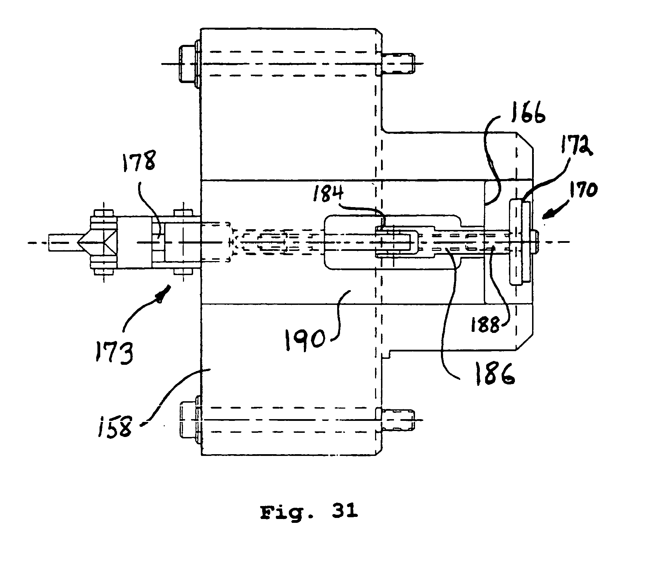

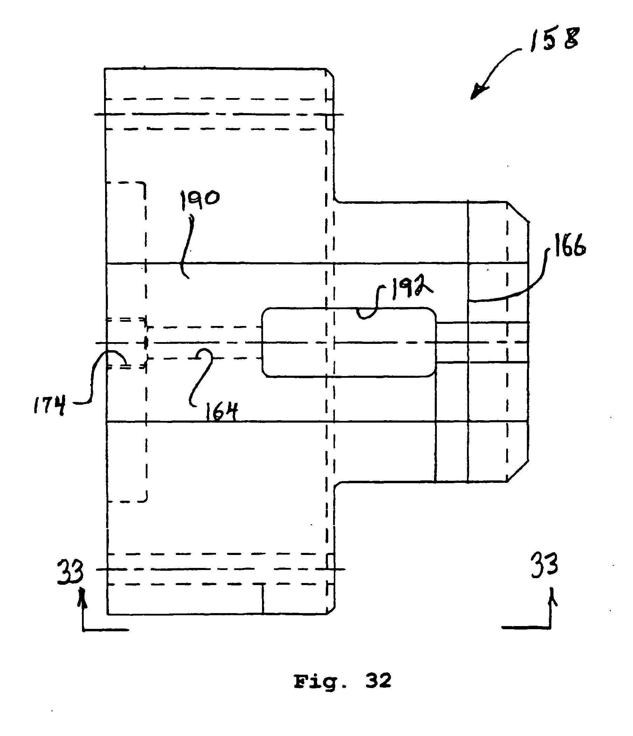

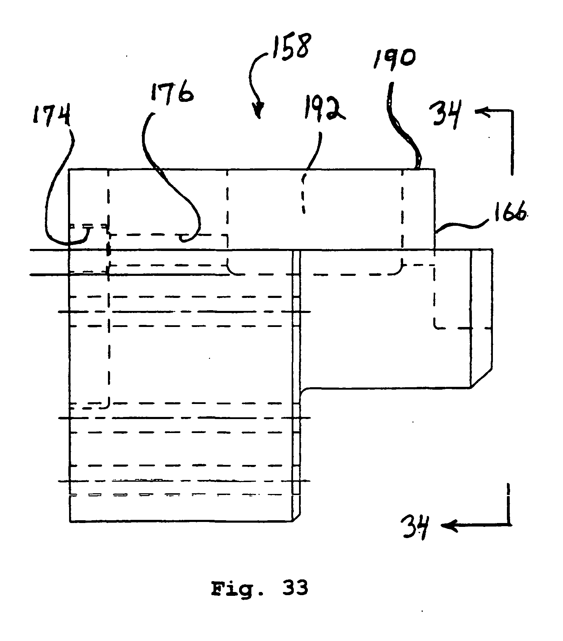

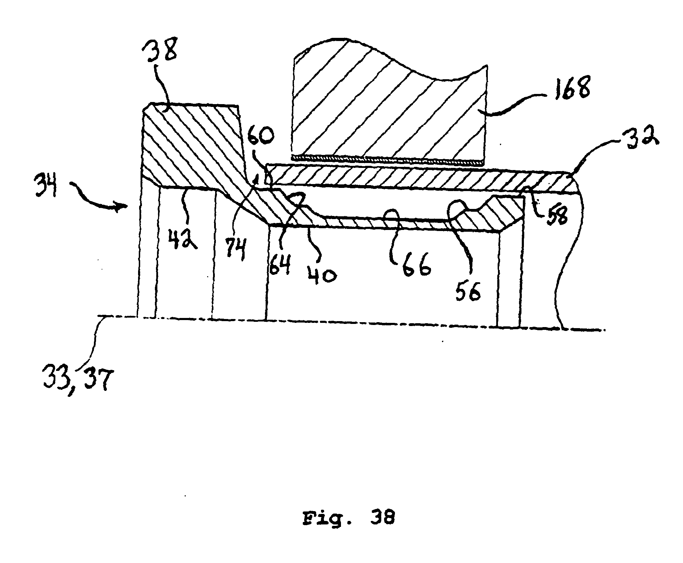

As best shown in Figs. 30-33, a tube locator 162 in an axial bore 164 in the locator block 158 grips the end fitting 34 and pulls it against a reference surface 166 on the locator block 158, or against a slotted spacer of precisely known thickness inserted between the surface 166 and the end fitting 34, to precisely position the end fitting 34 in the locator block 158, with the central section 57 of the tubular body 36 centered in an insulated channel 167 through the center of a web 168 of the field concentrator 156, as shown in Fig. 38. The position of the tube 32 is set by engagement of the rear end of the tube 32 with the reference surface on the back stop 138 on the rear carriage 114, and then is locked in place by the clamps 134.

The tube locator 162 includes a gripper such as the friction gripper 170 which has an elastomeric element such as a rubber disc 172 compressed between two washers and is sized slightly larger than the counterbore 42 in the end fitting 34. The gripper is pushed into the counterbore 42, slightly compressing the rubber disc 172 by the interference fit, enabling the gripper 170 to exert a frictional force on the end fitting when the gripper is pulled forward, thus pulling the end fitting 34 forward against the shoulder 166 of the locator block 158. The forward pull is exerted by an over-center cam action clamp 173 at the forward end of the tube locator 162. The clamp 173 is commercially available from the De-Sta Company as the Model 602 Toggle Clamp. The clamp 173 is threaded into a counterbored portion 174 of the axial bore 164 in the locator block 158 and has an axial shaft 178 that is moved axially when a handle 180 on the clamp 173 is rotated about its pivot 182. The axial shaft 178 is connected to the gripper 170 by a clevis 184 on the end of a connecting shaft 186. A threaded axial hole 187 through the connecting shaft 186 receives the threaded shank 188 of the gripper 170.

The gripper could also function as a support mandrel in the bore 40 of the end fitting 34. In this modification, the rubber disc 172 is replaced with an elongated cylindrical steel rod long enough to extend the full length of the bore 40 through the tubular body 36 and having a diameter slightly less than the diameter of the bore 40. An O-ring is set in a groove in the steel rod to hold the end fitting in place when the handle 180 of the clamp 173 is shifted to pull the end fitting against the shoulder 166 of the locator block 158. The steel rod supports the floor of the grooves 66 against deformation when the tube 32 is electromagnetically pulse formed onto the tubular body 36.

The axial bore 164 in the locator block lies in a semi-cylindrical hump 190 atop the locator block 158. An upwardly opening slot 192 in the top of the hump 190 communicates with the axial bore 164 and provides clearance for the gripper 170 to rotate about the clevis 184 up and out of the slot 192, so that it is accessible for inserting the end fitting 34 onto the gripper 170.

In operation, an order to manufacture torque tubes 30 of a certain diameter and length is received from the customer and a manufacturing order is sent to the shop. Lengths of tube 32 of the proper diameter and wall thickness are selected and are is cut to the desired length, which is the total length of the torque tube 30 less the thickness of the torque coupling 38 protruding from each end of the torque tube 30 and the width of the gap 74 between the end of the tube 32 and the shoulder 70 on the end fitting step 68. The tube 32 is coated with corrosion protecting primer on its interior surfaces when the tube 32 will not be heat treated at high temperature. The design of the end fitting 32 is tolerant of primer in the interface between the formed tube end and the fitting, so the tube may be primed before forming. That is, the ultimate strength and fatigue resistance of the joint between the tube end and the end fitting is not adversely affected by the presence of primer in the interface. The presence of primer in the joint also contributes to protection from galvanic corrosion should moisture penetrate the sealant applied after forming, as described below.

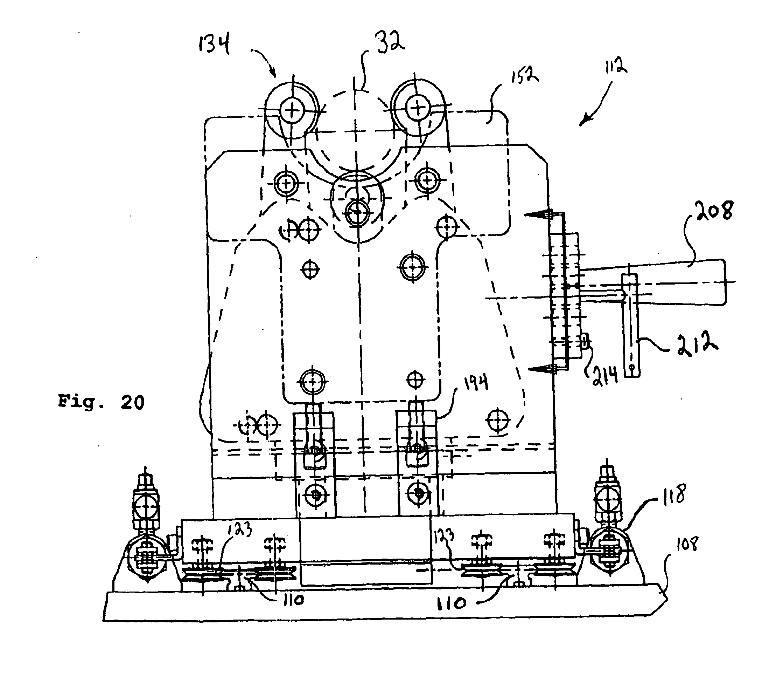

The apparatus 100 is set up by attaching the attachment block 152 of a tube locator assembly 150 of the correct size for that diameter tube 32 to the front face of the front carriage 112, and supporting the locator block 158 of that tube locator assembly on the cradle block 160 in line with the opening 103 in the main coil assembly 104. Attachment of the attachment block 152 to the front carriage assembly is facilitated by a pair of adjustable support brackets 194, shown in Figs. 15 and 20, attached to the front face of the carriage 112 beneath the position of the attachment block 152.

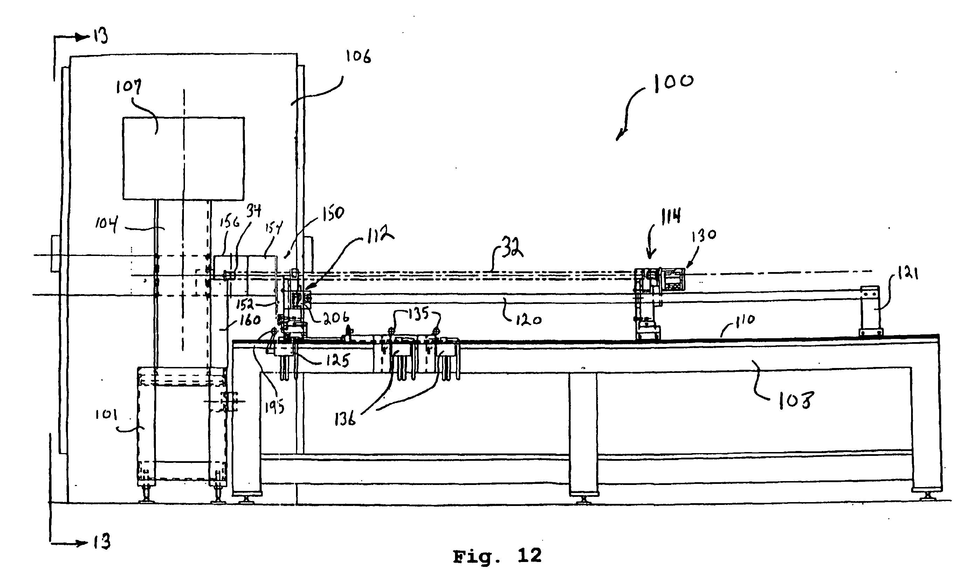

A calibration bar (not shown) of precisely known length, conveniently about 24 inches, is placed in the tube clamps 134, with its front end against the shoulder 166 of the locator block 158. The cylinders 118 are pressurized by operating the pneumatic control lever shown in Fig. 12 to drive the front carriage forward to the limit of the engagement of the attachment block 152 against the outer face of the cradle block 160. The hand wheel 122 is loosened and the rear carriage 114 is moved forward until front face of the back stop 138 contacts the rear end of the calibration bar. The digital indicator 130 is set for the length of the calibration bar, establishing accurately the distance from the front face of the back stop 138 to the shoulder 166.

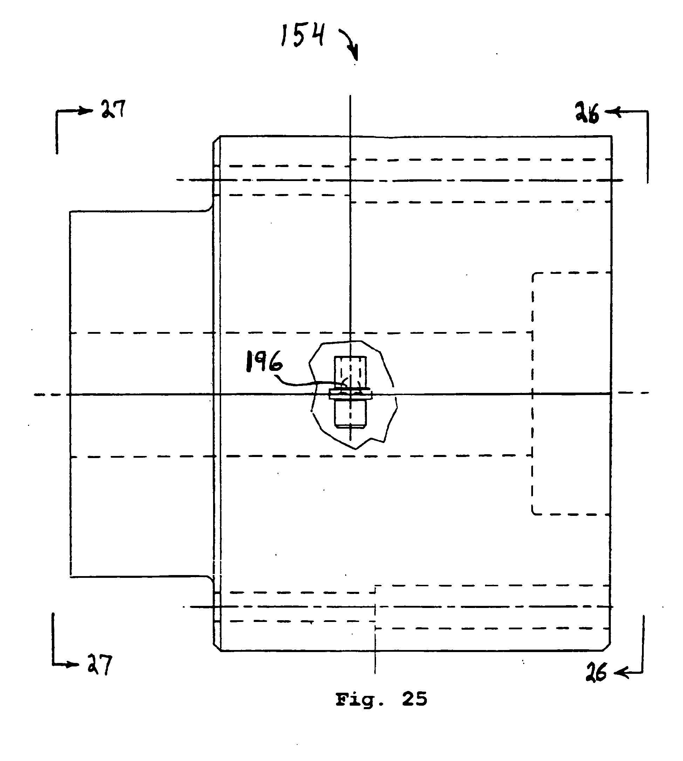

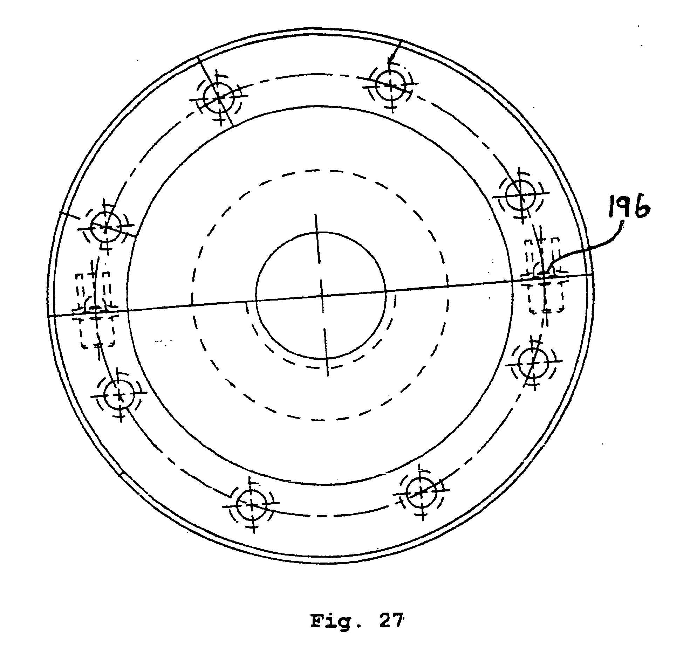

The gripper 170 in the slot 192 in the hump 190 is rotated up and out of the slot, and an end fitting 34 is slipped onto the gripper 170. A tube 32, precut to size, is slipped over the end fitting 34 and laid down onto the tube clamps 134, rotating the gripper back into the slot 192. The tube is slid back in the clamps 134 into contact with the back stop 138 and the control levers in the pneumatic control panel 136 are operated to close the clamps 134. The handle 180 on the toggle clamp 173 is rotated to draw the end fitting against the shoulder 166 in the locator block 158 which accurately centers the center section 57 of the tubular body 36 in the channel 167 through the web 168 of the field concentrator 156. The top half of the horizontally split and axially connected insulator block 154 and field concentrator is place atop the lower half and aligned with the help of alignment buttons 196 set into the top face of the lower half of the insulator block, as shown in Figs. 23, 25 and 27.

The handle 195 of the pneumatic control valve 125 for the cylinders 118 is rotated to pressurize the cylinders 118 and drive the pistons 116 forward. The pistons 116 push the front carriage 112 forward along the rails 110 to the limit of the travel of the carriage 112, which is when the attachment block 152 contacts the face of the main coil 104. At this position of the front carriage 112, the end of the tube 32 and the end fitting 34 are positioned in the center of the web 168 of the field concentrator 156, and the field concentrator 156 is axially centered in the opening 103 in the coil 104. The tube 32 and fitting are now positioned for electromagnetic forming.

The forming power for the particular tube diameter and wall thickness is selected, from tests previously performed of the optimal power levels for the various tube sizes, and the capacitors in the power supply cabinet 106 are charged. The power can be varied by charging the capacitors to a selected voltage and by charging all or a selected fewer number of capacitors in the capacitor bank. Five sets of capacitors, each with a storage capacity of 12 kilojoules, are provided in the cabinet 106 and may be selected in various combinations and charged to various voltages to give a selection of power levels from which the operator may select. When the capacitors are charged, the operator stands behind a safety shield and depresses a "Start" button on a remote operator panel which remotely operates one or more ignitrons to energize the windings in the coil 104 from the selected number of capacitors in the capacitor bank in the cabinet 106.

A power surge from the capacitors flows through the windings in the coil 104 and produces a rapidly rising magnetic field directed axially through the opening 103 in the main coil 104. The magnetic field induces eddy currents in the field concentrator 156 which flow circumferentially in the flange 155, as indicated by the arrows 198 in Fig. 28. The opening 103 in the main coil 104 is insulated by a suitable layer of insulation such as G-10 fiberglass to prevent eddy currents from shorting between the main coil 104 and the field concentrator 156. The insulation on the surface of the field concentrator at the horizontal dividing line breaks the circumferential conduction path and forces the eddy currents to complete the flow loop by flowing radially into the web 168 and circumferentially around the edges of the channel 167. Since the web narrows in cross-section at its radially inner portions, as shown in Fig. 29, the current density, and hence the magnetic field produced by the current, is intensified through the channel 167 in the web 168 of the field concentrator 156. The eddy currents in the web 168 are insulated from the tube 32 by a layer of insulation lining the channel 167.

The magnetic field in the channel 167 induced by the eddy currents in the web 168 induces an oppositely flowing circumferential eddy current, indicated by the arrows 199, in the tube 32 lying in the channel, as seen in Figs. 22 and 28. The eddy current around the tube 32 generates a magnetic field opposite to the direction of the magnetic field generated by the eddy currents in the field concentrator, and the opposed magnetic fields result in a powerful radial inward force pulse on the tube, and an equal radial force outward on the field concentrator 156. The force exerted inwardly on the tube deforms the tube walls inward against the tubular body 36 of the end fitting 34. The tubing material is stretched slightly as it conforms to the hexagonal cross-sectional shape of the central section 57 of the tubular body 36 but the rounded points of the hexagonal cross-section and the entry angle of the chamfered surfaces 62 and 64 between the end supporting surfaces 58 and 60 and the flat lands 56, and the surfaces between the flat lands 56 and the grooves 66 is shallow enough that the tubular wall of the tube 32 is not bent or tensioned enough to cause any cracks. However, the grooves 66 permit a radial excursion of the tube material in the central region of the flat lands 56 into the grooves which prevents the tubing material from springing back or rebounding back off the flat lands after the electromagnetic forming impulse force pulse.

As shown in Fig. 38, the web 168 of the field concentrator 156 is centered exactly over the center section 57 of the end fitting tubular body 36, shown in Figs. 4 and 6. The thickness of the web 168 in the direction of the axis 33 is preferably narrower than the center section 57 of the end fitting tubular body 36 to avoid creation of a high intensity magnetic field that produces a powerful radial force vector on the tube directly over the end supporting surface 58 and a center supporting surface 60 of the end fitting 34. The magnetic field will be strong enough to compress the tube around the supporting surfaces 58 and 60, but it is preferable to limit that force to allow the end of the tube 32 over the supporting surface 60 and the bight portion of the tube over the supporting surface 58 to be drawn in slightly as the tube deforms around and into the center section 57 of the end fitting tubular body 36. The inward drawing of tube material into the center section 57 during forming of the tube onto the end fitting minimizes any stretching of the tube material that otherwise could be caused by pinning the tube 32 to the supporting surfaces 60 and 58 with a radial force of sufficient magnitude to prevent the tube material to be drawn inward over the supporting surfaces 58 and 60 as the tube is formed onto the end fitting 34.

The desirable modulation of the radial force on the tube over the length of the tubular body 36 can also be achieved by chamfering the edges of the web 168 of the field concentrator 156 so the magnetic field intensity is less in the region of the supporting surfaces 58 and 60.

A pulse monitor and recorder system (not illustrated) displays the current delivered to the coil in three forms, the peak pulse current, the pulse width, and the pulse integral. This information for each forming pulse is also recorded and saved for each forming operation and is associated with the identification number for that particular torque tube for statistical process control and for research any problems that may develop with that part.

After forming the tube 32 on the end fitting 34 at one end of the torque tube 30, the lever 195 on the pneumatic control valve 125 is rotated to the right in Fig. 16 to withdraw the piston rods 116 from the extended position shown in Fig. 16 back into the cylinders 118, pulling the front carriage 112 and the connected rear carriage 114 rearward to the limit of the piston rod travel to the retracted position shown in Fig. 12. The connected top halves of the insulator block 154 and field concentrator 158 are lifted off the lower halves and are placed on a platform 210 located conveniently on the table 108 adjacent the main coil 104 at the retracted position of the insulator block and field concentrator. The tube clamps 134 are released by rotating the handles 135 to the right is Fig. 16, and the toggle clamp 173 is released by rotating the handle 180. The tube 32 is lifted out of the tube clamps 134, rotating the gripper 170 and connecting shaft 186 about the pivot for the clevis 184. The formed tube 32 and the end fitting 34 in which it is formed is slid off the gripper 170 and is reversed end-for-end so that the unformed end is now the forward end adjacent the front end of the apparatus 100.

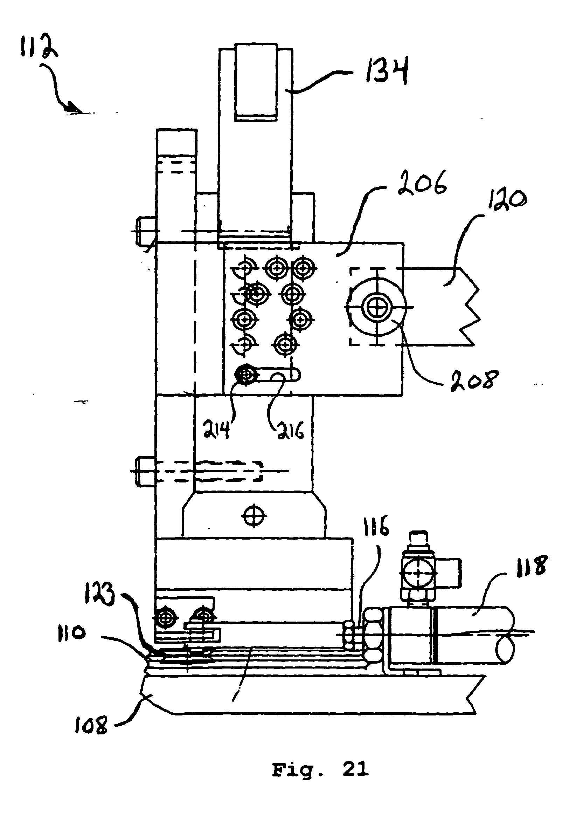

Since the tube 32 and its end fitting 34 attached at one end of the tube 32 are now longer than the tube 32 alone, it is necessary to make an adjustment in the apparatus 100 to accommodate the additional length. This adjustment is provided by an index plate 216 connected to the end of the connecting bar 121 by the threaded end of a handle 218 on the index plate 216 by which the front carriage 112 may be manually moved linearly along the rails 110. The index plate has a series of holes 210 which selectively align with threaded holes in underlying structure on the front carriage 112. A threaded pin 212 with a T-handle, shown most clearly in Fig. 21, secures the index plate 206 in the adjusted position. To make the adjustment, the threaded pin 212 is removed and the index plate 206 is moved a selected incremental distance on the front carriage, increasing the distance between the front carriage 112 and the rear carriage 114 by the thickness of the distal portion 78 of the end fitting 34, plus the width of the gap 74. This increase in the distance between the carriages 112 and 114 positions the other end of the tube 32 at the exact same position on the apparatus 100 as the first end of the tube 32 when the first end was formed onto the first end fitting 34. The threaded index pin 212 is reinserted in the selected hole and screwed in to securely hold the index plate in its new position. A screw 214 in a slot 216 in the index plate 206 is tightened to prevent the index plate 206 from tilting under the influence of an unbalanced moment exerted by vertically separated forces exerted on the index plate 206 by the index pin 212 and the threaded end of the handle 208. The holes 210 in the index plate 206 and the underlying holes in the front carriage 112 are positioned to provide index spacings for all the sizes of end fittings 34 that will be used to make torque tubes 30 on the apparatus 100.

A new end fitting 34 is slid over the gripper 170 and the tube 32 is rotated down onto the tube clamps 134, rotating the gripper 170 and the connecting shaft 186 about the pivot of the clevis 184 into the slot 192. Lengthening the distance between the front and rear carriages by resetting the index plate 206, as described above, accommodates the increased length of the tube 32 with the attached end fitting 34 at the one end, so the one end of the tube 32 with the attached end fitting 34 fits in front of the back stop 138. The handles 135 on the tube clamp control valves 136 are shifted to close the tube clamps 134 and clamp the tube 32 in place. The handle 180 on the toggle clamp 173 is shifted to pull the end fitting 34 in the other end of the tube 32 against the reference surface 166 in the locator block. The tube 32 and the end fitting 34 are now secured in their correct relative positions in the channel of the web 168, as illustrated in Fig. 22 and 23, ready for forming the tube end onto the fitting. The connected top halves of the field concentrator and insulator block are removed from the platform 200 and placed on top of the lower halves, using the alignment buttons 196 to correctly position the top halves on the bottom halves. The handle 195 on the control valve 125 for the cylinders 118 is shifted to pressurize the cylinders and drive the carriages 112 and 114 forward until the attachment block 152 engages the cradle block 160, at which point the field concentrator 156 is centered with its web 168 in the center of the main coil 104. The coil is energized, as described above, to form the tube end onto the end fitting 34.

The outward magnetically induced force exerted on the field concentrator 156 is resisted inertially by the relatively massive field concentrator halves and is also absorbed by the strong internal structures inside the main coil 104. These internal structures inside the main coil 104 also support the coil itself from radially outward forces exerted on itself when the coil 104 is energized. Thus, the coil and field concentrator structures are designed to be reusable for many years of steady use in an industrial environment. The operation of the apparatus 100 is quiet and safe and permits a high rate of production with predictable repeatable and reproducible results.

The 2024 aluminum tube in the T-3 condition in which it received from the supplier and in which it is formed is susceptible to stress corrosion cracking around the region of the formed end of the tube 32 in presence of salt spray and long duration fatigue loading. Accordingly, the formed torque tube 30 is artificially aged to the T-81 condition at which its susceptibility to stress corrosion cracking is greatly reduced. Artificially aging to the T-81 condition is accomplished by heating the torque tube 30 to 375°F and holding it at that temperature for 12 hours, then allowing it to cool gradually in air until it reaches room temperature. After cooling, the torque tube in its T-81 condition is painted with a tough, chip resistant paint for corrosion resistance.

When making torque tubes 30 with thin wall tubing at high power settings, the forming rate may be higher than the tubing material can withstand, resulting in small cracks in the region of the shoulder 62. The preferred cure for such cracks is to reduce the power setting so the tube 32 is formed more gently onto the end fitting 34. Alternatively, the tube 32 may be heat treated to the W condition by heating to about 975°F for 45-60 minutes, and then within 9 seconds it is water quenched, then cooled to about -20°F until the tube is ready for forming. After forming in the W condition, the tube naturally age hardens to the T-42 condition and is later heat treated to the T-62 condition by heating to about 375°F for 12 hours and allowed to air cool to room temperature. Like the T-81 condition to which the tube in the T-3 condition is heat treated, the T-62 condition has improved resistance to corrosion stress cracking. When using tubes that are heat treated to the W condition, it is impractical to prime the tubes before forming, so the end fittings are primed instead to produce a layer of primer between the end fitting 34 and the tube 32. The process is tolerant of primer in the interface between the tube and the end fitting and the quality of the joint is not adversely affected by the primer.

The end fittings 34 are sealed in the tube 32 against intrusion of moisture into the interface between the tube 32 and the end fitting 34 to prevent galvanic corrosion that can occur between dissimilar metals in the presence of an electrolyte. Although the interior of the tube 32 was already primer coated prior to forming the end onto the end fitting 34, sealant is applied as double protection. Any sealant that is suitable for the application can be used. For use in the leading edge of an airplane wing, the sealant should be a durable, elastic material that adheres tenaciously and retains its properties for at least about twenty years in the presence of extreme environmental factors of temperature and chemicals in which the torque tube will operate, such as hydraulic fluid and lubricants. The sealant is applied by wiping into the gap 74 and onto the shoulder at the inner axial end 35 of the tubular body 36.

Obviously, numerous modifications and variations of the described preferred embodiment will occur to those skilled in the art in light of the teaching herein. Accordingly, it is expressly to be understood that these modifications and variations, and the equivalents thereof, are to be considered within the scope of the invention as defined in the following claims.

## Claims

1. An end fitting (34) connected to an end of a conductive metal tube (32) by electromagnetically forming the tube end around said end fitting, the end fitting (34) comprising:
a tubular body (36) having a longitudinal axis (37), and a torque coupling (38) at one axial end of said tubular body; wherein the end fitting (34) comprises:
a center section (57) of said tubular body having a cross section, on a plane normal to said longitudinal axis, that is approximately in the form of a regular polygon having a series of flats (56) circumferentially spaced around said center section, a corner circumferentially spaced between each of said flats on said center section of said tubular body, each of said corners forming an angle of greater than 90°, said tubular body having a wall thickness in a central region of said flats; and
an elongated groove (66) in each of said flats extending parallel to the longitudinal axis and dimensioned to accommodate a substantial incursion of said tube into said groove when said tube is electromagnetically formed Onto said end fitting, to accommodate spring-back of said metal tube and prevent said metal tube from rebounding away from said flats; wherein
each groove is circular in cross section perpendicular to said longitudinal axis;
each groove is longer than 65% of the length of said center section of said tubular body, and is deeper than 15% of the width of said flats; and
each groove has a depth of between 20%-75% of said wall thickness in the central region of said flats; whereby
the metal tube is conformed around said corners.

2. An end fitting as defined in claim 1, wherein:
each end of said tubular body has a cylindrical portion having a radius of curvature about equal to a circumscribed circle around said regular polygon.

3. An end fitting as defined in claim 1 or 2, wherein:
said circumferentially spaced corners between said flats on said center section of said tubular body are rounded with about the same radius of curvature as said radius of curvature of said circle circumscribed around said regular polygon.

4. An end fitting as defined in claim 2, further comprising:
a step (68) between one of said cylindrical portions and said torque coupling providing a shoulder (70) facing an axial end of said tube and forming a gap therebetween into which a sealant is applied and held for preventing ingress of moisture between said tube and said end fitting.

5. A process of transmitting torque from a driver at one end of a torque tube to a driven device at the other end of said torque tube, wherein the torque tube is the conductive metal tube connected to the end fitting according to any one of claims 1-4 and the process comprises:
engaging the torque coupling on the end fitting with said driver for receiving torque from said driver and driving said end fitting;
conveying said torque from said torque coupling to said tubular body of said end fitting;
transmitting said torque from said tubular body to the conductive metal tube formed at one end thereof around said tubular body by electromagnetic pulse forming, said tube tightly conforming around corners at intersections of said flat faces of said tubular body and projecting at least partially into said grooves;
transferring said torque through said tube to an opposite end thereof and to a similar end fitting attached to said opposite end by electromagnetic pulse forming; and
engaging a torque coupling on said similar end fitting with said driven device for delivering torque from said torque tube and thereby driving said driven device.

6. A process for forming a conductive metal tube onto an end fitting to provide an end fitting connected to an end of a conductive metal tube according to any of claims 1-4, the process comprising:
inserting said end fitting into one end of said tube;
generating a first powerful transient magnetic field in a coil over said tubular body (36) of said fitting with outside and inside axial edges of said magnetic field lying over end portions of said center section (57) of said tubular body (36) at both axial ends of said center section (57) of said end fitting;
forming a portion of said metal tube around and against said fitting with electromagnetic radial forces on said tube, conforming said metal tube around corners of the polygonal shape of the cross section of the center section (37) of the end fitting (34), and partially forming said metal tube into said grooves to accommodate spring-back of said metal tube and prevent said metal tube from rebounding away from said flats of said polygonal shape.

7. A process according to claim 6, wherein:
said tubular body is connected to said metal tube for torque transmitting, said torque coupling at one end of said tubular body is adapted for coupling to a driven of driving device;
said first powerful transient magnetic field induces rapidly increasing circumferential eddy currents in said one end of said metal tube;
said second rapidly rising transient magnetic field with said eddy currents in said one end of said tube is generated, said second transient magnetic field being opposite in direction from said first transient magnetic field;
equal and opposite radial forces on said field concentrator and said one end of said metal tube are generated; and
said field concentrator restrained and radially supported against radial deformation thereof under influence of said radial forces;

8. A process as defined in claim 6 or 7, wherein:
said metal tube is made of 2024 aluminum in a T-3 condition during said forming step.

9. A process according to claim 6, 7 or 8, comprising:
supporting and clamping said tube on a carriage assembly, and positioning and fixing said end fitting at a desired position relative to said tube end;
moving said tube and end fitting in said clamped position on said carriage assembly to locate said tube end and said end fitting in an opening in a stationary coil or creating a first powerful transient magnetic field axially along said one end of said metal tube and thereby inducing rapidly increasing circumferential eddy currents in said one end of said metal tube, and for generating a second rapidly rising transient magnetic field with said eddy currents in said one end of said tube, said second transient magnetic field being opposite in direction from said first transient magnetic field;
generating equal and opposite radial forces on said coil and said one end of said metal tube;

10. A process as defined in any of claims 6-9, further comprising:
positioning said tube end and said end fitting in said coil opening with said first magnetic field over a tubular main body of said end fitting with outside and inside axial edges of said magnetic field lying over cylindrical portions of said tubular main body.

11. A process as defined in claim 7 , wherein said restraining step includes:
positioning said coil in a strong structural supporting enclosure; and
positioning a field concentrator in an opening in said enclosure, insulated therefrom, with a small clearance between said field concentrator and said opening and restraining said field concentrator with circumferential walls of said opening.

12. A process of making a torque tube, comprising: cutting a conductive metal tube to a desired length for said torque tube;
inserting the tubular body of the end fitting according to any of claims 1-4 axially into one end of said metal tube;
forming said metal tube onto said tubular main body of said end fitting to establish a rigid, torque transmitting coupling between said end fitting and said metal tube and to provide an end fitting connected to an end of a conductive metal tube according to any of claims 1-8 by a process according to any of claims 6-11.

13. A process as defined in claim 12, further comprising:
heat treating said torque tube after said forming step to improve corrosion cracking resistance of said metal tube.

14. A process as defined in claim 12 or 13, further comprising:
applying a sealant around said end of said tube and around the other end of said end fitting to seal against ingress of moisture into interface spaces between said tube interior surfaces and said end fitting.

15. A process as defined in any of claims 6-14, wherein a field concentrator has a T-shaped cross-section on a plane in which said longitudinal axis lies.

16. An apparatus (100) for forming a tube onto an end fitting (34) inserted in said tube (32), comprising:
a main coil (104) for creating a first powerful transient magnetic field axially along one end of said tube and thereby inducing rapidly increasing circumferential eddy currents in said one end of said tube (32), and generating a second rapidly rising transient magnetic field with said transient magnetic field being opposite in direction from said first transient magnetic field and thereby generating equal and opposite radial forces on said coil (104) and said one end of said metal tube (32);
a structure for restraining and radially supporting said main coil (104) against radial deformation under influence of said radial forces;
a tube clamping and transport system (102) for clamping said tube (32) on a centerline of said main coil (104) and moving said tube end and said end fitting (34) into said coil (104) for electromagnetic pulse forming said tube end onto said end fitting (34).

## Patentansprüche

1. Endstück (34), welches mit dem Ende eines leitenden Metallrohrs (32) verbunden ist, indem das Rohrende elektromagnetisch um das Endstück geformt wird, wobei das Endstück (34) umfasst:
einen röhrenförmigen Körper (36) mit einer longitudinalen Achse (37) und einer Drehmomentkupplung (38) an einem axialen Ende des röhrenförmigen Körpers, wobei das Endstück (34) umfasst:
einen Mittelabschnitt (37) des röhrenförmigen Körpers mit einem Querschnitt in einer Ebene senkrecht zu der longitudinalen Achse, welcher annähernd die Form eines regelmäßigen Polygons mit einer Abfolge von Abflachungen (56), welche umfangsmäßig um den Mittelabschnitt beabstandet sind, und eine zwischen jeder der Abflachungen auf dem Mittelabschnitt des röhrenförmigen Körpers umfangsmäßig beabstandete Ecke, aufweist, wobei jede dieser Ecken einen Winkel größer als 90° bildet,
wobei der röhrenförmige Körper in einem mittleren Gebiet der Abflachungen eine Wandstärke aufweist
und
eine langgestreckte Vertiefung (66) in jeder der Abflachungen, welche sich parallel zu der longitudinalen Achse erstreckt und dimensioniert ist, eine wesentliche Einkrümmung des Rohrs in die Vertiefung aufzunehmen, wenn das Rohr elektromagnetisch auf das Endstück geformt wird, um ein Zurückspringen des Metallrohrs aufzunehmen und das Metallrohr daran zu hindern, von den Abflachungen weg zurückzugehen, wobei jede Vertiefung einen kreisförmigen Querschnitt senkrecht zu der longitudinalen Achse aufweist,
wobei jede Vertiefung länger als 65 % der Länge des Mittelabschnittes des röhrenförmigen Körpers ist und tiefer als 15 % der Breite der Abflachungen ist, und
wobei jede Vertiefung eine Tiefe zwischen 20 % und 75 % der Wandstärke in dem mittleren Gebiet der Abflachungen aufweist, wodurch das Metallrohr um die Ecken angepasst wird.

2. Endstück nach Anspruch 1, wobei jedes Ende des röhrenförmigen Körpers einen zylindrischen Abschnitt mit einem Krümmungsradius aufweist, welcher etwa gleich einem um das regelmäßige Polygon gezogenen Kreis ist.

3. Endstück nach Anspruch 1 oder 2, wobei die umfangsmäßig beabstandeten Ecken zwischen den Abflachungen auf dem Mittelabschnitt des röhrenförmigen Körpers mit etwa demselben Krümmungsradius wie der Krümmungsradius des um das regelmäßige Polygon gezogenen Kreises abgerundet sind.

4. Endstück nach Anspruch 2, weiterhin umfassend:
eine Stufe (68) zwischen einem der zylindrischen Abschnitte und der Drehmomentkupplung, welche eine Schulter (70) bereitstellt, welche einem axialen Ende des Rohrs zugewandt ist und einen Zwischenraum dazwischen bildet, in welchen ein Dichtmittel aufgebracht und gehalten wird, um ein Eindringen von Feuchtigkeit zwischen dem Rohr und dem Endstück zu verhindern.

5. Verfahren zum Übertragen eines Drehmoments von einem Antrieb an einem Ende eines Drehmomentrohrs auf ein angetriebenes Gerät an dem anderen Ende des Drehmomentsrohrs, wobei das Drehmomentrohr das mit dem Endstück nach einem der Ansprüche 1 bis 4 verbundene leitende Metallrohr ist, wobei das Verfahren umfasst:
in Eingriff bringen der Drehmomentkupplung auf dem Endstück mit dem Antrieb, um ein Drehmoment von dem Antrieb aufzunehmen und das Endstück anzutreiben,
Übertragen des Drehmoments von der Drehmomentkupplung auf den röhrenförmigen Körper des Endstücks,
Übertragen des Drehmoments von dem röhrenförmigen Körper auf das an einem Ende hiervon um den röhrenförmigen Körper durch elektromagnetisches Pulsformen ausgebildete leitende Metallrohr, wobei das Rohr eng um Ecken an Schnittlinien der flachen Flächen des röhrenförmigen Körpers angepasst ist und zumindest teilweise in die Vertiefungen hineinragt,
Übertragen des Drehmoments durch das Rohr auf ein gegenüberliegendes Ende hiervon und auf ein ähnliches Endstück, welches an dem gegenüberliegenden Ende durch elektromagnetisches Pulsformen angebracht ist, und
in Eingriff bringen einer Drehmomentkupplung an dem ähnlichen Endstück mit dem angetriebenen Gerät, um ein Drehmoment von dem Drehmomentrohr zu liefern und somit das angetriebene Gerät anzutreiben.

6. Verfahren zum Formen eines leitenden Metallrohrs auf ein Endstück, um ein mit einem Ende eines leitenden Metallrohrs verbundenen Endstück gemäß einem der Ansprüche 1 bis 4 bereitzustellen, umfassend:
Einsetzen des Endstücks in ein Ende des Rohrs,
Erzeugen eines ersten starken transienten magnetischen Feldes in einer Spule über dem röhrenförmigen Körper des Stücks,
wobei äußere und innere axiale Kanten des magnetischen Feldes über Endabschnitten des Mittelabschnitts des röhrenförmigen Körpers an beiden axialen Enden des Mittelabschnitts des Endstücks liegen,
Formen eines Abschnitts des Metallrohrs um und gegen das Stück mit elektromagnetischen radialen Kräften auf das Rohr,
wodurch das Metallrohr um Ecken der Polygonform des Querschnitts des Mittelabschnitts (37) des Endstücks (34) angepasst wird und das Metallrohr teilweise in die Vertiefungen geformt wird, um ein Zurückspringen des Metallrohrs aufzunehmen und das Metallrohr daran zu hindern, von den Flächen der Polygonform zurückzugehen.

7. Verfahren nach Anspruch 6, wobei
der röhrenförmige Körper mit dem Metallrohr zur Drehmomentübertragung verbunden ist, und die Drehmomentkupplung an einem Ende des röhrenförmigen Körpers zur Kopplung mit einem Treiber eines Antriebsgeräts ausgelegt ist,
wobei das erste starke transiente magnetische Feld schnell anwachsende umfangsmäßige Wirbelströme in dem einen Ende des Metallrohrs induziert,
wobei das zweite schnell ansteigende transiente magnetische Feld mit den Wirbelströmen in dem einen Ende des Rohrs erzeugt wird, wobei das zweite transiente Magnetfeld eine zu dem ersten transienten Magnetfeld entgegengesetzte Richtung aufweist,
wobei gleiche und entgegengesetztgerichtete radiale Kräfte auf den Feldkonzentrator und das eine Ende des Metallrohrs erzeugt werden, und
der Feldkonzentrator gegen seine radiale Deformation unter Einfluss der radialen Kräfte gehalten und radial gestützt wird.

8. Verfahren nach Anspruch 6 oder 7, wobei das Metallrohr aus 2024 Aluminium in einem T-3 Zustand während des Formschrittes gefertigt ist.

9. Verfahren nach Anspruch 6, 7 oder 8, umfassend:
Stützen und Klemmen des Rohrs auf eine Trägeranordnung und Positionieren und Befestigen des Endstücks in einer gewünschten Position relativ zu dem Rohrende,
Bewegen des Rohrs und des Endstücks in der eingeklemmten Position auf der Trägeranordnung, um das Rohrende und das Endstück in einer Öffnung einer stationären Spule anzuordnen oder um ein erstes starkes transientes Magnetfeld axial entlang dem einen Ende des Metallrohrs, wodurch schnell anwachsende umfangsmäßige Wirbelströme in dem einen Ende des Metallrohrs erzeugt werden, zu erzeugen, und um ein zweites schnell anwachsendes transientes Magnetfeld mit den Wirbelströmen in dem einen Ende des Rohrs zu erzeugen, wobei das zweite transiente Magnetfeld eine zu dem ersten transienten Magnetfeld entgegengesetzte Richtung aufweist,
Erzeugen gleicher und entgegengesetzt gerichteter radialer Kräfte auf die Spule und das eine Ende des Metallrohrs.

10. Verfahren nach einem der Ansprüche 6 bis 9, weiterhin umfassend:
Positionieren des Rohrendes und des Endstücks in der Spulenöffnung mit dem ersten magnetischen Feld über einen röhrenförmigen Hauptkörper des Endstücks derart, dass äußere und innere axiale Kanten des magnetischen Feldes über zylindrischen Abschnitten des röhrenförmigen Hauptkörpers liegen.

11. Verfahren nach Anspruch 7,
wobei der Schritt des Haltens umfasst:
Positionieren der Spule in einer stabilen strukturellen tragenden Einhüllung, und
Positionieren eines Feldkonzentrators in einer Öffnung in der Einhüllung von dieser isoliert mit einem kleinen Zwischenraum zwischen dem Feldkonzentrator und der Öffnung, und
Halten des Feldkonzentrators mit Umfangswänden der Öffnung.

12. Verfahren zur Herstellung eines Drehmomentrohrs, umfassend:
Schneiden eines leitenden Metallrohrs auf eine für das Drehmomentrohr gewünschte Länge,
axiales Einsetzen des röhrenförmigen Körpers des Endstücks gemäß einem der Ansprüche 1 bis 4 in ein Ende des Metallrohrs,
Formen des Metallrohrs auf den röhrenförmigen Hauptkörper des Endstücks, um eine steife, drehmomentübertragende Kupplung zwischen dem Endstück und dem Metallrohr herzustellen und um ein mit einem Ende eines leitenden Metallrohrs verbundenes Endstück nach einem der Ansprüche 1 bis 4 durch ein Verfahren nach einem der Ansprüche 6 bis 11 bereitzustellen.

13. Verfahren nach Anspruch 12, weiterhin umfassend:
Wärmebehandeln des Drehmomentrohrs nach dem Formschritt, um eine Korrosionsspannungsbeständigkeit des Metallrohrs zu verbessern.

14. Verfahren nach Anspruch 12 oder 13, weiterhin umfassend:
Aufbringen eines Dichtmittels um das Ende des Rohrs und um das andere Ende des Endstücks, um gegen ein Eindringen von Feuchtigkeit in Schnittstellenräume zwischen den inneren Oberflächen des Rohrs und dem Endstück abzudichten.

15. Verfahren nach einem der Ansprüche 6 bis 14,
wobei ein Feldkonzentrator einen T-förmigen Querschnitt in einer Ebene, in welcher die longitudinale Achse liegt, aufweist.

16. Vorrichtung (100) zum Formen eines Rohrs auf ein in das Rohr (32) eingesetztes Endstück (34), umfassend:
eine Hauptspule (104) zum Erzeugen eines ersten starken transienten magnetischen Feldes axial entlang einem Ende des Rohres und damit zum Erzeugen schnell anwachsender umfangsmäßiger Wirbelströme in dem einen Ende des Rohrs (32), und zum Erzeugen eines zweiten schnell anwachsenden transienten magnetischen Feldes, wobei das transiente magnetische Feld eine entgegengesetzte Richtung zu dem ersten transienten magnetischen Feld aufweist, und damit zum Erzeugen gleicher und entgegengesetzt gerichteter radialer Kräfte auf die Spule (104) und das eine Ende des Metallrohrs (32),
eine Struktur zum Halten und radialen Stützen der Hauptspule (104) gegen radiale Deformation unter Einfluss der radialen Kräfte,
ein Rohrklemm- und -transportsystem (102) zum Klemmen des Rohrs (32) auf eine Mittellinie der Hauptspule (104) und zum Bewegen des Rohrendes und des Endstücks (34) in die Spule (104) zum elektromagnetischen Pulsformen des Rohrendes auf das Endstück (34).

## Revendications

1. Embout (34) pour un raccordement à l'extrémité d'un tube métallique conducteur (32) par formation électromagnétique de l'extrémité du tube autour dudit embout, l'embout (34) comprenant :
un corps tubulaire (36) présentant un axe longitudinal (37), et un couplage de couple (38) au niveau d'une extrémité axiale dudit corps tubulaire ; où l'embout (34) comprend :
une section centrale (57) dudit corps tubulaire présentant une section transversale, sur un plan perpendiculaire audit axe longitudinal, c'est-à-dire approximativement sous la forme d'un polygone normal comprenant une série de facettes (56) espacées dans le sens circonférentiel autour de ladite section centrale ; un coin espacé dans le sens circonférentiel entre chacune desdites facettes sur ladite section centrale dudit corps tubulaire, chacun desdits coins formant un angle supérieur à 90°, ledit corps tubulaire présentant une épaisseur de paroi dans une région centrale desdites facettes ; et
une rainure allongée (66) dans chacune desdites facettes s'étendant parallèlement à l'axe longitudinal et dimensionnée pour recevoir une incursion substantielle dudit tube dans ladite rainure lorsque ledit tube est formé de manière électromagnétique sur ledit embout, pour loger un retour élastique dudit tube métallique et empêcher ledit tube métallique de rebondir depuis lesdites facettes ; dans lequel
chaque rainure est circulaire en coupe transversale perpendiculaire audit axe longitudinal ;
chaque rainure est plus longue que 65% de la longueur de ladite section centrale dudit corps tubulaire, et est plus profonde que 15% de la largeur desdites facettes ; et
chaque rainure présente une profondeur d'entre 20% et 75% de ladite épaisseur de paroi dans la région centrale desdites facettes ;
le tube métallique se conforme par là autour desdits coins.

2. Embout selon la revendication 1, dans lequel :
chaque extrémité dudit corps tubulaire comprend une partie cylindrique présentant un rayon de courbure environ égal à un cercle circonscrit autour dudit polygone normal.

3. Embout selon la revendication 1 ou 2, dans lequel :
lesdits coins espacés dans le sens circonférentiel entre lesdites facettes sur ladite section centrale dudit corps tubulaire sont arrondis avec environ le même rayon de courbure que ledit rayon de courbure dudit cercle circonscrit autour dudit polygone régulier.

4. Embout selon la revendication 2, comprenant en outre :
une marche (68) entre une desdites portions cylindriques et ledit couplage de couple fournissant un épaulement (70) faisant face à une extrémité axiale dudit tube et formant un espace entre les deux dans lequel un produit d'étanchéité est appliqué et maintenu pour empêcher l'entrée de l'humidité entre ledit tube et ledit embout.

5. Procédé de transmission de couple depuis un dispositif de commande à une extrémité d'un tube de couple vers un dispositif commandé à l'autre extrémité dudit tube de couple, dans lequel le tube de couple est le tube métallique conducteur raccordé à l'embout selon l'une des revendications 1-4 et le procédé comprend les étapes consistant à :
mettre en prise le couplage de couple sur l'embout avec ledit dispositif de commande pour recevoir le couple depuis ledit dispositif de commande et commandant ledit embout ;
transporter ledit couple depuis ledit couplage de couple vers ledit corps tubulaire dudit embout ;
transmettre ledit couple depuis ledit corps tubulaire à un tube métallique conducteur formé à une extrémité de celui-ci autour dudit corps tubulaire par formation d'impulsion électromagnétique, ledit tube se conformant de manière étanche autour des coins à des intersections desdites faces de facette dudit corps tubulaire et faisant saillie au moins partiellement dans lesdites rainures ;
transférer ledit couple à travers ledit tube à une extrémité opposée de celui-ci et à un embout similaire fixé à ladite extrémité opposée par formation de pulsion électromagnétique ; et
mettre en prise un couplage de couple sur ledit embout similaire avec ledit dispositif commandé pour fournir le couple depuis ledit tube de couple et de ce fait commander ledit dispositif commandé.

6. Procédé de formation d'un tube métallique sur un embout pour fournir un embout raccordé à une extrémité d'un tube métallique conducteur selon l'une quelconque des revendications 1 à 4, le procédé comprenant les étapes consistant à :
insérer ledit embout dans une extrémité dudit tube ;
générer un premier champ magnétique transitoire puissant dans une bobine sur ledit corps tubulaire (36) dudit embout avec des bords axiaux extérieur et intérieur dudit champ magnétique reposant sur des parties d'extrémité de ladite section centrale (57) dudit corps tubulaire (36) au niveau des deux extrémités axiales de ladite section centrale (57) dudit embout ;
former une partie dudit tube métallique autour et contre ledit embout avec des forces radiales électromagnétiques sur ledit tube, conformant ledit tube métallique autour des coins de la forme polygonale de la section transversale de la section centrale (37) de l'embout (34), et formant partiellement ledit tube métallique dans lesdites rainures pour adapter un retour élastique dudit tube métallique et empêcher ledit tube métallique de rebondir depuis lesdites facettes de ladite forme polygonale.

7. Procédé selon la revendication 6, dans lequel :
ledit corps tubulaire est raccordé audit tube métallique pour la transmission de couple, et ledit couplage de couple à une extrémité dudit corps tubulaire est adapté pour coupler à une commande d'un dispositif de commande ;
ledit premier champ magnétique transitoire puissant induit des courants de Foucault circonférentiels augmentant rapidement dans ladite première extrémité dudit tube métallique ;
ledit deuxième champ magnétique transitoire augmentant rapidement avec lesdits courants de Foucault dans ladite première extrémité dudit tube est généré, ledit deuxième champ magnétique transitoire étant opposé dans un sens depuis ledit premier champ magnétique transitoire ;
des forces radiales égales et opposées sur ledit concentrateur de champ et ladite première extrémité dudit tube métallique sont générées ; et
ledit concentrateur de champ restreint et supporté dans le sens radial contre la déformation radiale de celui-ci sous l'influence desdites forces radiales.

8. Procédé selon la revendication 6 ou 7, dans lequel :
ledit tube métallique est composé d'aluminium 2024 dans une condition T-3 pendant ladite étape de formation.

9. Procédé selon la revendication 6, 7 ou 8, comprenant les étapes consistant à :
supporter et serrer ledit tube sur un ensemble formant chariot, et positionner et fixer ledit embout à une position souhaitée par rapport à ladite extrémité de tube ;
déplacer lesdits tube et embout dans ladite position serrée sur ledit ensemble formant chariot pour placer ladite extrémité de tube et ledit embout dans une ouverture dans une bobine fixe ou en créant un premier champ magnétique transitoire puissant dans le sens axial le long de ladite première extrémité dudit tube métallique et induisant de ce fait rapidement des courants de Foucault circonférentiels croissants dans ladite première extrémité dudit tube métallique, et pour générer un deuxième champ magnétique transitoire augmentant rapidement avec lesdits courants de Foucault dans ladite première extrémité dudit tube, ledit deuxième champ magnétique transitoire étant opposé en direction dudit premier champ magnétique transitoire ;
générer des forces radiales égales et opposées sur ladite bobine et ladite première extrémité dudit tube métallique.

10. Procédé selon l'une quelconque des revendications 6-9, comprenant en outre les étapes consistant à :
positionner ladite extrémité de tube et ledit embout dans ladite ouverture de bobine avec ledit premier champ magnétique sur un corps principal tubulaire dudit embout avec des bords axiaux extérieurs et intérieurs dudit champ magnétique reposant sur les parties cylindriques dudit corps principal tubulaire.

11. Procédé selon la revendication 7, dans lequel ladite étape de restriction comprend les étapes consistant à :
positionner ladite bobine dans une enceinte de support structurelle robuste ; et
positionner un concentrateur de champ dans une ouverture dans ladite enceinte, isolée de celui-ci, avec un faible jeu entre ledit concentrateur de champ et ladite ouverture et restreindre ledit concentrateur de champ avec les parois circonférentielles de ladite ouverture.

12. Procédé de fabrication d'un tube de couple, comprenant les étapes consistant à :
couper un tube métallique conducteur à une longueur désirée pour ledit tube de couple ;
insérer le corps tubulaire d'un embout selon l'une quelconque des revendications 1-4, dans le sens axial dans une extrémité dudit tube métallique ;
former ledit tube métallique sur ledit corps principal tubulaire dudit embout pour établir un couplage de transmission de couple rigide entre ledit embout et ledit tube métallique et fournir un embout raccordé à une extrémité d'un tube métallique conducteur selon l'une des revendications 1-8 par un procédé selon l'une quelconque des revendications 6-11.

13. Procédé selon la revendication 12, comprenant en outre les étapes consistant à :
traiter thermiquement ledit tube de couple après ladite étape de formation pour améliorer la résistance aux fissures par corrosion dudit tube métallique.

14. Procédé selon la revendication 12 ou 13, comprenant en outre :
appliquer un produit d'étanchéité autour de ladite extrémité dudit tube et autour de l'autre extrémité dudit embout pour mettre en étanchéité contre l'entrée d'humidité dans les espaces d'interface entre lesdites surfaces intérieures de tube et ledit embout.

15. Procédé selon l'une quelconque des revendications 6-14, dans lequel un concentrateur de champ présente une section transversale en forme de T sur un plan dans lequel ledit axe longitudinal repose.

16. Dispositif (100) destiné à former un tube sur un embout (34) inséré dans ledit tube (32) comprenant :
une bobine principale (104) pour créer un premier champ magnétique transitoire puissant dans le sens axial le long d'une extrémité dudit tube et de ce fait induire des courants de Foucault circonférentiels augmentant rapidement dans ladite extrémité dudit tube (32), et générer un deuxième champ magnétique transitoire croissant avec ledit champ magnétique transitoire étant opposé en direction audit premier champ magnétique transitoire et générer de ce fait des forces radiales égales et opposées sur ladite bobine (104) et ladite première extrémité dudit tube métallique (32) ;
une structure pour restreindre et supporter dans le sens radial ladite bobine principale (104) contre la déformation radiale sous l'influence desdites forces radiales ;
un système de serrage et de transport de tube (102) pour serrer ledit tube (32) sur une ligne centrale de ladite bobine principale (104) et déplacer ladite extrémité de tube et ledit embout (34) dans ladite bobine (104) pour former par impulsion électromagnétique ladite extrémité de tube sur ledit embout (34).
